Europäisches Patentamt

European Patent Office

Office européen des brevets

(19)

(11) **EP 1 154 341 B1**

(12) **EUROPEAN PATENT SPECIFICATION**

(45) Date of publication and mention
of the grant of the patent:
**16.03.2005 Bulletin 2005/11**

(51) Int Cl.⁷: **G05B 19/19**, G05B 19/414,
G05B 19/40

(21) Application number: **01109345.7**

(22) Date of filing: **12.04.2001**

(54) **Drive control device and method for controlling a drive mechanism, and data storage medium carrying a computer program**

Vorrichtung zur Antriebsteuerung, Verfahren zur Steuerung eines Antriebmechanismus und
Datenspeichermedium mit Computerprogram

Dispositif de commande d'entraînement, méthode de commande de mécanisme d'entraînement et
milieu de stockage de données contenant un programme d'ordinateur

| | |
|---|---|
| (84) Designated Contracting States:<br>**AT BE CH CY DE DK ES FI FR GB GR IE IT LI LU MC NL PT SE TR** | (74) Representative: **Hoffmann, Eckart, Dipl.-Ing. Patentanwalt, Bahnhofstrasse 103 82166 Gräfelfing (DE)** |
| (30) Priority: **12.05.2000 JP 2000140541**<br>**29.05.2000 JP 2000158348** | (56) References cited:<br>**EP-A- 0 773 488**    **GB-A- 2 136 332**<br>**US-A- 5 583 410**    **US-A- 5 703 454**<br>**US-A- 5 998 955** |
| (43) Date of publication of application:<br>**14.11.2001 Bulletin 2001/46** | • **PATENT ABSTRACTS OF JAPAN vol. 018, no. 243 (M-1602), 10 May 1994 (1994-05-10) & JP 06 032018 A (HITACHI LTD;OTHERS: 01), 8 February 1994 (1994-02-08)** |
| (73) Proprietor: **SEIKO EPSON CORPORATION Shinjuku-ku, Tokyo 163-0811 (JP)** | |
| (72) Inventor: **Kawase, Yuji Suwa-shi, Nagano-ken 392-8502 (JP)** | |

**Description**

The present invention relates to a drive control device and method for controlling a drive mechanism including drive control means and drive means controlled by the drive control means, wherein the drive mechanism is required to operate with high precision. Furthermore, the invention relates to a method of performing drive operation confirmation of a drive mechanism.

Extremely fast and precise operation is necessary in the drive mechanisms of many modern electronic devices. In printers, for example, this has meant using stepping motors or linear motors for driving the paper transport mechanism and the carriage carrying the print head. In order to print the desired text or graphic in the correct position, it is also necessary to drive the print head (print operation) quickly and precisely according to the movement of the carriage and the paper. This invention relates to a control device for driving precisely and at high speed a drive mechanism such as used in modern electronic devices, a corresponding control method, and a data storage medium carrying a computer program that executes the steps of this control method.

Conventional techniques for controlling drive mechanisms include control methods using CPU (Central Processing Unit) interrupt signals and control methods using dedicated hardware. Fast and precise control of a print head drive mechanism by these conventional methods is further described below referring to a stepping motor as an example of the drive means. Note that similar control is also needed for other drive mechanisms. The phase pattern of current applied to the motor at a phase change timing must be changed, and the amount of current flowing to the motor may also need to be changed, as part of motor control. Control during motor acceleration and deceleration is particularly complex because the phase change timing must be sequentially changed while at the same time the amount of current supplied to the motor must also be sequentially changed according to the specific acceleration or deceleration conditions.

Control with dedicated hardware uses so-called hard-wired controllers to control motor phase change and current supply. However, while using dedicated hardware offers the advantage of high precision control, the cost of providing such dedicated hardware is generally high. Other disadvantages of using dedicated hardware are a longer development time and the inability to flexibly and easily change the control method.

In CPU-based interrupt control methods the CPU runs an interrupt process at a specific timing to read, from memory, control data for changing the phase pattern of current applied to the motor or for controlling the amount of current flowing to the motor, and to supply this control data to a drive controller. This method makes it possible to shorten product development time and flexibly change the control operation, while also helping to minimize development and product costs. CPU interrupt control methods are therefore widely used in the development of modern electronics because of their ability to shorten development time and accommodate fast changes in design requirements.

The CPU interrupt control process can ensure precise drive control by the drive controller according to the control data sent from the CPU as long as the drive means is operating. However, various errors and problem factors can prevent the drive means from operating according to the control data. In case of a carriage drive mechanism for moving the print head of a printer, for example, the carriage can be prevented from moving by an obstruction, such as a paper jam, in the carriage path. Under such circumstances changing the phase pattern or current supply from the drive controller will not cause the motor (as the drive means of the carriage drive mechanism) to turn because the carriage cannot move. When this happens the expected carriage position (that is, the position where the carriage should be, called the "logical" position herein) computed by the drive controller from the control data differs from the position where the carriage actually is (the "actual" carriage position), and carriage drive cannot be precisely controlled.

An appropriate process must therefore be executed to handle such problems. In the print head carriage drive mechanism, for example, sensors regularly detect the actual carriage position to confirm if the carriage is being driven correctly. Operation is confirmed by CPU control causing the carriage to move regularly (such as every 6 seconds) to a specific sensor position (such as the home position) to detect the physical carriage position, compare this actual carriage position with the logical carriage position, and detect any offset between the two.

This position confirmation is also accomplished by a CPU interrupt process reading drive control data from memory to drive the motor and move the carriage to the home position. Drive control accuracy is confirmed from the logical carriage position computed from the control data and the offset from the actual carriage position detected at the home position.

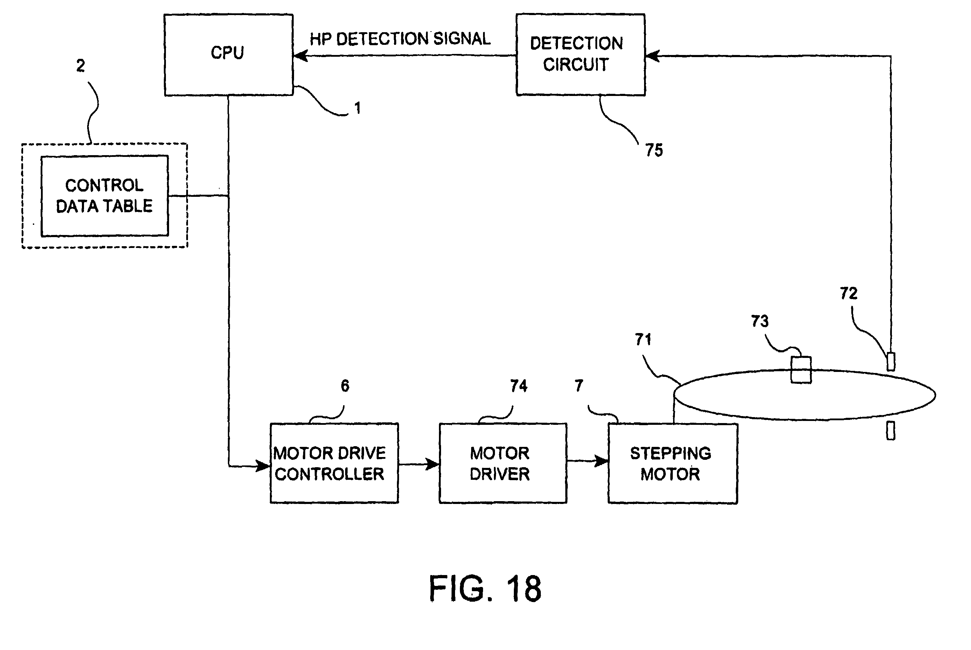

A conventional drive operation confirmation process using a CPU is described below with reference to Fig. 18. CPU 1 reads motor drive control data from a control data table stored in memory 2 at the phase change timing, and sends the control data to a motor drive controller 6. The drive controller 6 drives motor driver 74 based on the control data and thus causes motor 7 to turn. When the motor 7 turns, carriage 73 reciprocates through the carriage path by way of a power transfer mechanism 71. Simultaneously to sending the control data, CPU 1 computes the amount of motor drive from the control data and determines from the computed amount the logical position of carriage 73. A photosensor or other detector 72 is disposed at the home position in the movement path of carriage 73. When the carriage 73 moves to the home position, detection circuit 75 detects the carriage. When the detection circuit 75 detects that the carriage 73 is in the home position, it sends an interrupt signal (home position (HP) detection signal in this case) to the CPU 1. When CPU 1 receives this interrupt signal it compares the logical carriage position with the home position to determine whether the carriage 73 is being driven normally. If the logical position is greatly offset from the actual carriage position at the home position, CPU 1 knows that carriage 73 is not driven normally and runs a particular error handling process. Motor drive control and position confirmation operations in the CPU 1 interrupt control process thus maintain accurate carriage movement.

With a CPU interrupt control process as described above, however, the CPU load is increased by reading control data from memory whenever the drive needs to be controlled. The CPU normally executes many different processes, and if overall CPU processing power is not sufficient for interrupt control and these other processes, the interrupt process time varies and it can be difficult to sustain fast, high precision drive control. To suppress fluctuation in the interrupt process and enable high precision motor control in such cases, it is necessary to accelerate the CPU or take other measures. This is also true when the drive error detection operation and process are run within the CPU interrupt process.

A device and method for controlling a drive mechanism in accordance with the pre-characterizing portion of claim 1 and that of claim 14, respectively, in known from US-A-5,583,410. In this prior art the first direct memory access means responds to its own second start signal by loading the next timing data into the timer.

It is an object of the invention to provide a drive control device and a corresponding control method that allow achieving fast and precise drive control while minimizing the CPU interrupt processes once the drive control started.

A yet further object of the invention is to provide a drive control device for comparing a calculated drive operation determined from control data with the actual drive operation to confirm whether the drive mechanism operates normally and to enable precise drive control.

These objects are achieved with a drive control device as claimed in claim 1, a method as claimed in claim 14, a computer program as claimed in claim 18, and a data storage medium as claimed in claim 19, respectively. Preferred embodiments of the invention are subject-matter of the dependent claims.

With consideration for and as a result of research into solutions for the aforementioned problems, the inventor found that the above problems can be resolved by using a direct memory access controller to read timing and control data from memory and send the control data to a drive controller.

In one embodiment of the invention a timing data table including timing data for controlling drive timing, and plural control data tables each storing one of plural control data types, are stored in memory before the drive mechanism is started to be driven. A respective entry in the timing data table and a corresponding entry in each of the control data tables form a data set. When the CPU issues a drive start request, a DMA (Direct Memory Access) controller reads the first timing data used to trigger reading the first control data from each control data table and the next timing data. As a result, the DMA controller sequentially reads each control data type for each timing at which drive operation is to change, and sends the necessary control data to the drive controller. Operation of the drive mechanism can thus be controlled independently of and without any CPU interrupts once operation started. The change timing is controlled by setting the timing data in a timer and using the timer's time-up signal for triggering the next steps.

Thus, in accordance with the present invention, timing data and specific control data is stored in memory in advance of the drive mechanism control, and direct memory access is used to set the timing data in a timer and the control data in the drive controller of the drive mechanism to be controlled. As a result, the present invention enables high precision control of drive mechanism without using CPU interrupts and without using expensive dedicated hardware.

Other objects and attainments together with a fuller understanding of the invention will become apparent and appreciated by referring to the following description of preferred embodiment taken in conjunction with the accompanying drawings, in which:

Fig. 1    shows a first embodiment of a drive control device according to the present invention;

Fig. 2    is a function block diagram of a more detailed example of the drive control device in Fig. 1;

Fig. 3    is a function block diagram of the first embodiment with two types of control data;

Fig. 4    illustrates the data flow and data transmission procedure when the drive control device shown in Fig. 3 sends control data to the drive mechanism;

Fig. 5    is a function block diagram of a drive control device for controlling a stepping motor according to a second embodiment of the present invention;

Fig. 6    is a graph showing the typical control sequence of a stepping motor;

Fig. 7 shows the state transitions of a continuous control operation sequence from a start motor drive request to setting the change timing, first type control data, and second type control data, driving the motor, and setting the next change timing;

Fig. 8 is a flow chart of the motor control process of the second embodiment;

Fig. 9 is a function block diagram of a drive control device for controlling a print head according to a third embodiment of the present invention ;

Fig. 10 shows the state transitions of a continuous control operation sequence from the start head drive request to setting the change timing, first control data, and second control data, printing, and setting the next change timing;

Fig. 11 is a schematic block diagram of a drive control device for controlling a carriage drive mechanism for moving the print head of a serial printer according to a fourth embodiment of the invention;

Fig. 12 is a function block diagram for describing in further detail the operation of the drive control device shown in Fig. 11;

Fig. 13 shows the locations of a carriage movement range, printing area, non-printing area, and the home position;

Fig. 14 is a state transition diagram showing various states in the drive confirmation process;

Fig. 15 shows an exemplary configuration of the drive confirmation means 50 of the present invention;

Fig. 16 is a flow chart showing the confirmation operation of a controller 60 of the drive confirmation means 50;

Fig. 17 is a state transition diagram showing the relationship between a continuous control operation from the start motor drive request to setting the change timing data, phase pattern data, and phase current data to setting the next change timing, and the drive confirmation process of this control operation;

Fig. 18 is a block diagram describing a conventional drive confirmation process using a CPU.

**First Embodiment**

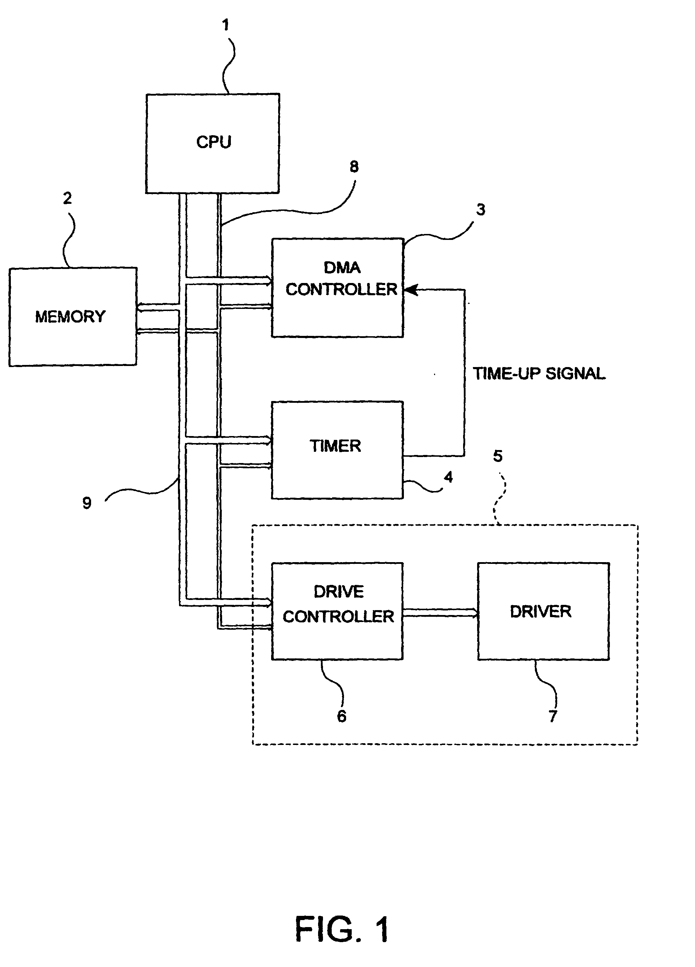

Fig. 1 is a schematic block diagram illustrating the basic structure of a drive control device explained below as a first embodiment of the present invention.

A CPU 1 accomplishes various operations according to a program including firmware and operating system (OS)) stored in a memory 2. A DMA controller 3 enables data to be exchanged directly between memory 2 and I/O devices without going through CPU 1.

It should be noted that to simplify the following description, only a timer 4 and a drive mechanism 5 are shown in Fig. 1 as I/O devices. In this embodiment. drive mechanism 5 includes a drive controller 6 and a drive unit or actuator 7. The address to be read from memory 2 and the destination of the read data are specified by address data on an address bus 8, and the read data is output onto a data bus 9.

When timing data representing a certain time interval is sent from memory 2 to timer 4, timer 4 counts the time corresponding to that time interval and outputs a time-up signal to the DMA controller 3 when the specified time interval has ended. The DMA controller 3 then sends the specified control data from memory 2 to drive controller 6, which in turn controls a drive unit or driver 7 according to the control data.

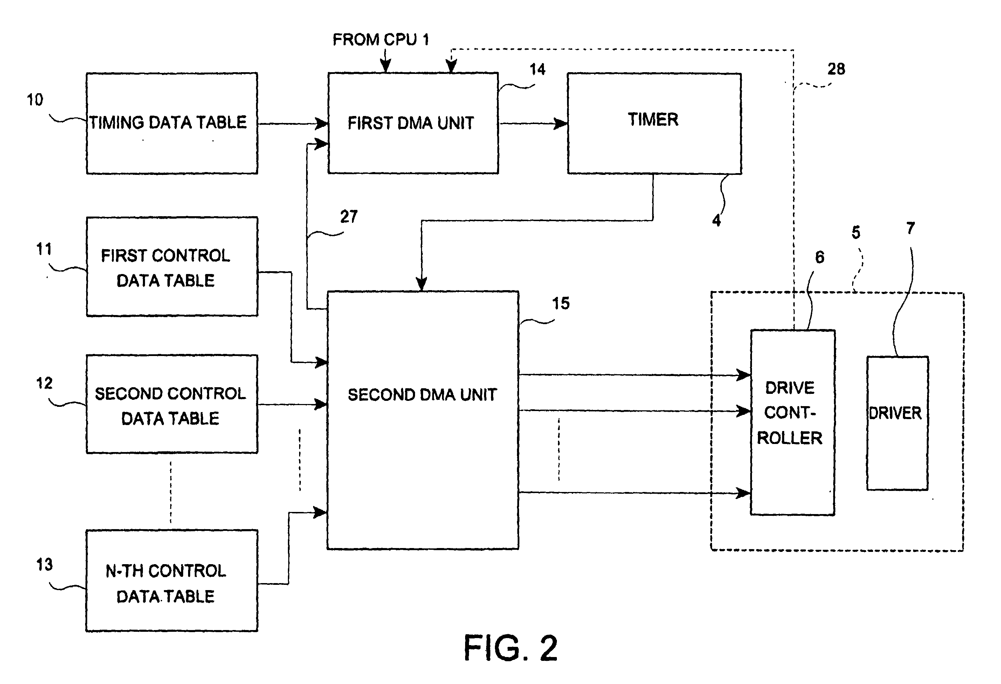

A more detailed example of the drive control device is described next with reference to its function block diagram shown in Fig. 2.

Referring to Fig. 2, a timing data storage 10 stores a timing data table including the timing data for use in controlling the timing at which the drive control is to switch the operation or driving state of the drive mechanism. First to N-th control data storages 11, 12, 13 store first to N-th control data tables. The data storages 10 to 13 are preferably achieved by allocating a certain address space in memory 2 (see Fig. 1), and the respective data is stored in these data storages by the CPU 1 before the drive control operation starts. In the following description reference numerals 10 to 13 will be used for both the data storages and the data tables respectively stored therein.

In this example, DMA controller 3 comprises a DMA unit 14 (referred to as "timing control unit" hereinafter) and a DMA unit 15. Timing control unit 14 and DMA unit 15 can be sub-units of a single DMA unit, but can also be discrete DMA units.

Timer 4 counts the time corresponding to the time interval indicated by the timing data and outputs a time-up signal when that time interval lapses. Drive controller 6 controls driver 7 based on the control data it receives from DMA unit 15. The driver 7 is typically a stepping motor or a print head, but may be each of a variety of other drive units.

When a start signal is sent from CPU 1 to timing control unit 14, timing control unit 14 reads first timing data from the timing data table 10 and sends the timing data to timer 4. The timing data specifies the time interval from the current operating state of drive mechanism 5 to the moment at which the operating state is to be changed to a next one. When the timing data is sent to timer 4, timer 4 starts counting the indicated time interval and outputs a time-up signal to DMA unit 15 when the time interval has elapsed.

When it receives this time-up signal, DMA unit 15 first reads first control data from the first control data table 11, and sends the first control data to drive controller 6. When sending this first control data is completed, first control data from the second control data table 12 is read and sent to drive controller 6. This operation continues to sequentially send the respective first control data from each control data table until the first control data from the N-th control data table 13 has been sent. The drive controller 6 then controls driver 7 based on the first to N-th first control data thus received. It should be noted that "N" depends on the number of types of control data needed to control a particular driver, such as a print head, a carriage drive motor, or a paper feed transport motor.

When the last, that is N-th, first control data is or has been sent to drive controller 6, timing control unit 14 is activated again by a particular trigger event. While, preferably, the completion of the transmission of the N-th control data to the drive controller 6 is used as the trigger event, another event relating to control data transmission (such as the start of the transmission) can be alternatively used. In the example here, it will be assumed that the trigger event is the completion of the control data transmission.

As shown by a solid line 27 in Fig. 2, timing control unit 14 can be activated by an activation signal sent from DMA unit 15 to timing control unit 14 when the transmission of the N-th controls data ends. Alternatively, timing control unit 14 can be activated by drive controller 6 sending an activation signal to the timing control unit 14 as indicated by a dotted line 28 in Fig. 2.

When triggered by the activation signal from DMA unit 15 (or drive controller 6), timing control unit 14 reads the next (second) timing data, if any, from timing data table 10 and sends this timing data to timer 4. Timer 4 then again counts the time interval specified by this next timing data, and sends a second time-up signal to the DMA unit 15 when that time interval has passed. When it receives this time-up signal, the DMA unit 15 sequentially reads second control data from the first to N-th control data tables, and sends the read second control data to drive controller 6. It will be understood that the timing and control data tables store one or more data sets each data set consisting of timing data and N types (N ≥ 1) of control data. If there is more than one data set, the individual data sets are retrieved and processed one after the other with the time sequence being controlled by the timing data.

While, in case of plural data sets, these operations are repeated, the driver 7 is driven according to the timing data and control data of each data set, until the specified drive operation is completed and all data sets have been processed. It is thus possible to precisely and accurately control the drive mechanism 5 without involving the CPU 1 once drive control operation started. The CPU 1 only needs to store, before drive control really starts, all timing data and control data, such as drive distance and/or speed, needed for the particular drive mechanism in the data tables 10 to 13.

The DMA unit 15 is described in further detail next.

It should be noted that while in Fig. 2 first to N-th control data tables (N types of control data) are shown in addition to the timing data, the number and kinds of control data types actually used will vary depending on the particular drive mechanism and drive mode. For example, two types of control data are typically used in each data set to control a stepping motor. To simplify the following description, a data set including timing data and only two types of control data will be used by way of example.

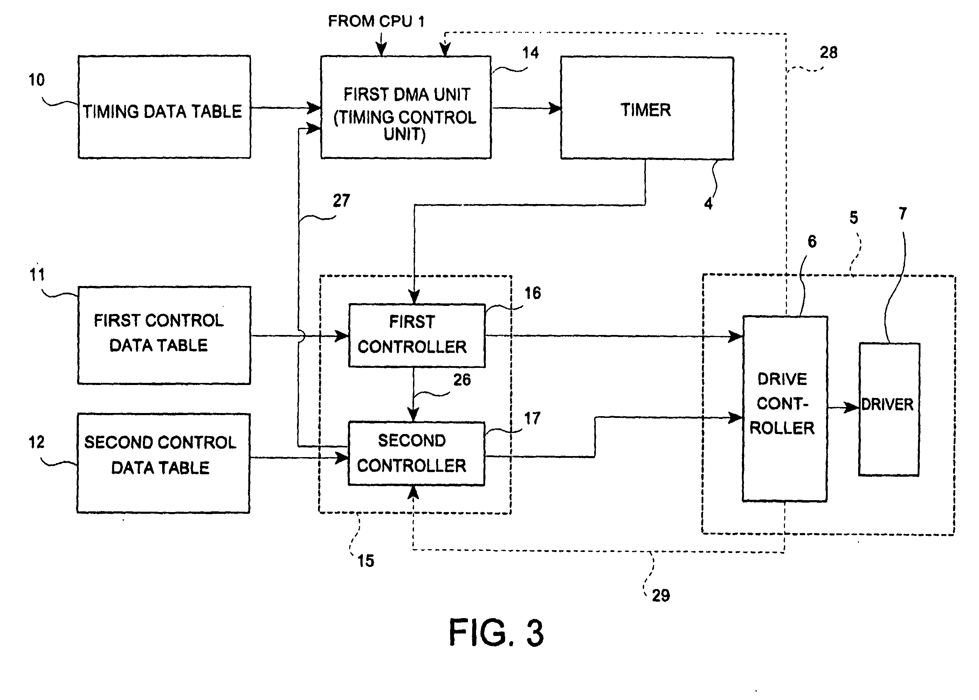

Fig. 3 is a function block diagram of an embodiment using timing data and two types of control data and illustrates a more detailed example of the DMA unit 15 for this case. As shown, DMA unit 15 comprises a first controller 16 and a second controller 17 corresponding to the control data types. Both controllers 16 and 17 are DMA (sub-) controllers capable of reading data directly from memory without using the CPU.

When timing data of a first data set is sent from timing control unit 14 to timer 4 and timer 4 detects that the time interval specified by the timing data has passed, timer 4 sends a time-up signal to first controller 16.

When its receives the time-up signal, first controller 16 reads the first type control data of the first data set from the first control data table 11, and passes the read data to drive controller 6. When sending of the first type control data to drive controller 6 ends, second controller 17 is activated. Note that second controller 17 can be activated when first controller 16 sends an activation signal (via solid line 26 in Fig. 3) to second controller 17 when the sending of the first type control data ends, or it can be activated when drive controller 6 sends an activation signal to second controller 17 (via the dotted line 29) after receiving the first type control data is completed.

When so activated, the second controller 17 reads the second type control data of the first data set from the second control data table 12 and sends it to drive controller 6. Based on this control data, drive controller 6 starts operation of driver 7 when it receives the first type control data or when it has received both the first and the second type control data.

When sending of the second type control data to drive controller 6 ends, timing control unit 14 is activated again. Note that the timing control unit 14 can be activated by an activation signal from second controller 17 (via solid line 27) when the sending of the second type control data ends, or it can be activated by an activation signal from drive controller 6 (via dotted line 28).

When timing control unit 14 receives the activation signal from second controller 17 (or drive controller 6), it reads the timing data of the next (second or further) data set from the timing data table, and sends it to timer 4. The timer 4 then counts the time interval specified by that timing data and, when the specified time interval has passed, it sends a next (second or further) time-up signal to first controller 16.

As already described above, the first controller 16 then reads the first type control data of the next (second or further) data set from the first control data table and sends it to the drive controller 6. When sending the first type control data ends, the second controller 17 is again activated as described above to read the second type control data of the next (second or further) data set from the second control data table and send the data to the drive controller 6. Operation of the driver 7 based on the previous control data stops at this point and operation based on the next control data starts.

The above described operation continues so that driver 7 is driven based on the timing data and control data stored in the timing data table and the control data tables, respectively, until the specific drive operation ends.

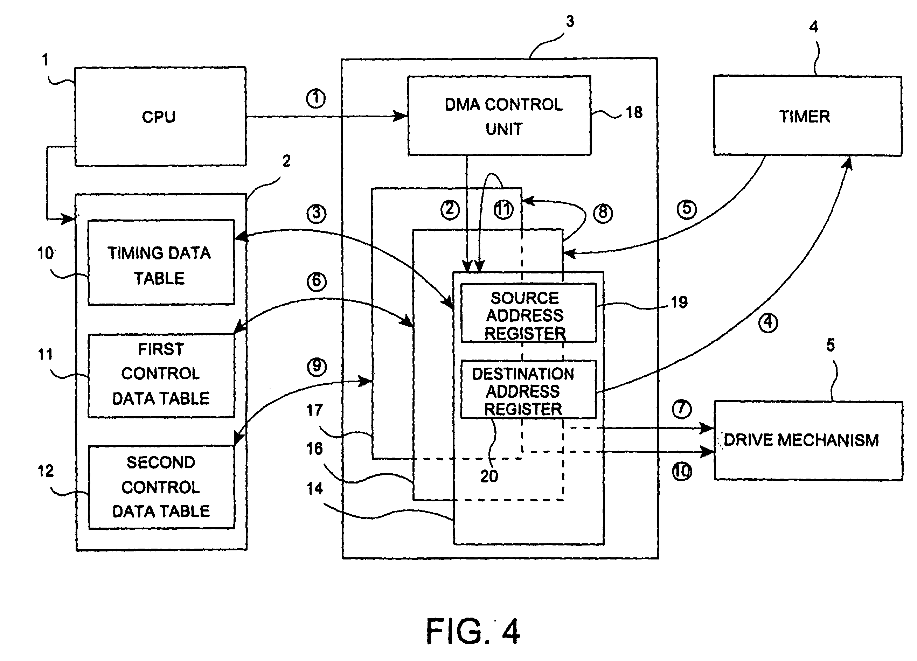

Fig. 4 shows the data flow and data transmission for sending timing data and control data to the drive mechanism 5.

As noted above, timing data table 10, first control data table 11, and second control data table 12 are stored in a specific address space in memory 2, and timing control unit 14, first controller 16, and second controller 17 are disposed in DMA controller 3.

Before drive mechanism operation starts, CPU 1 first writes the required data sets of timing data and control data for controlling the drive mechanism 5 to specific addresses in memory 2 corresponding to the respective data tables. Operation then proceeds as described below to control the operation of drive mechanism 5.

(1) CPU 1 sends a signal for activating timing control unit 14 to control unit 18 of DMA controller 3.

(2) Control unit 18 activates timing control unit 14.

(3) As described above, timing control unit 14 reads timing data from timing data table 10 of memory 2. The address of the data to be read is stored in a source address register in timing control unit 14 and is incremented to specify the next address after each read.

(4) The read timing data (not shown in the figure) is then sent to timer 4 based on the address specified in a destination address register 20.

(5) The timer 4 monitors the passage of the time interval specified by the timing data and sends a time-up signal to first controller 16 when the time interval has passed. A typical timer structure can be used for timer 4.

(6) When it receives the time-up signal, first controller 16 reads the first type control data from the first control data table by referencing its own source address register (not shown in the figure). The address stored in that source address register is then incremented to the next address.

(7) The read first type control data is then sent to drive mechanism 5 based on the address in a destination address register (not shown in the figure).

(8) The second controller 17 is activated when sending the first type control data ends.

(9) The second controller 17 then reads the second type control data from the second control data table by referencing its own source address register (not shown in the figure). As with timing control unit 14 and first controller 16, this source address register is then incremented to the next address.

(10) The read second type control data is sent to drive mechanism 5.

(11) When sending the second type control data ends, timing control unit 14 is activated again and reads the timing data of the next data set based on the incremented address in source address register 19.

This process is repeated to control the drive mechanism until all data sets have been processed and driving ends.

**Second Embodiment**

As a second a embodiment of the present invention an embodiment applying the principles of the first embodiment to a drive mechanism using a stepping motor as an example of a driver is described next.

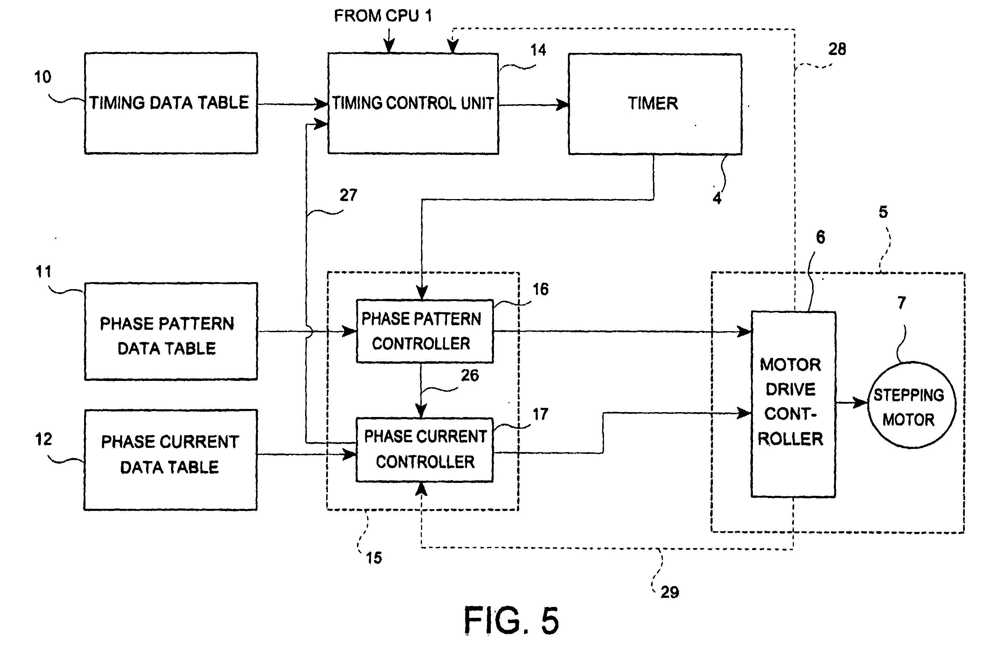

Fig. 5 is a function block diagram of a drive control device. In this embodiment, the timing control unit 14 of Fig. 3 serves as a phase change timing control unit, while the first controller 16 and the second controller 17 of Fig. 3 serve as a phase pattern controller and a phase current controller, respectively. As in the case shown in Fig. 3, these elements are preferably parts of one DMA controller, and are shown as separate function blocks for ease of understanding only. As mentioned before, drive 7 is a stepping motor in this embodiment and, correspondingly, drive controller 6 a motor drive controller.

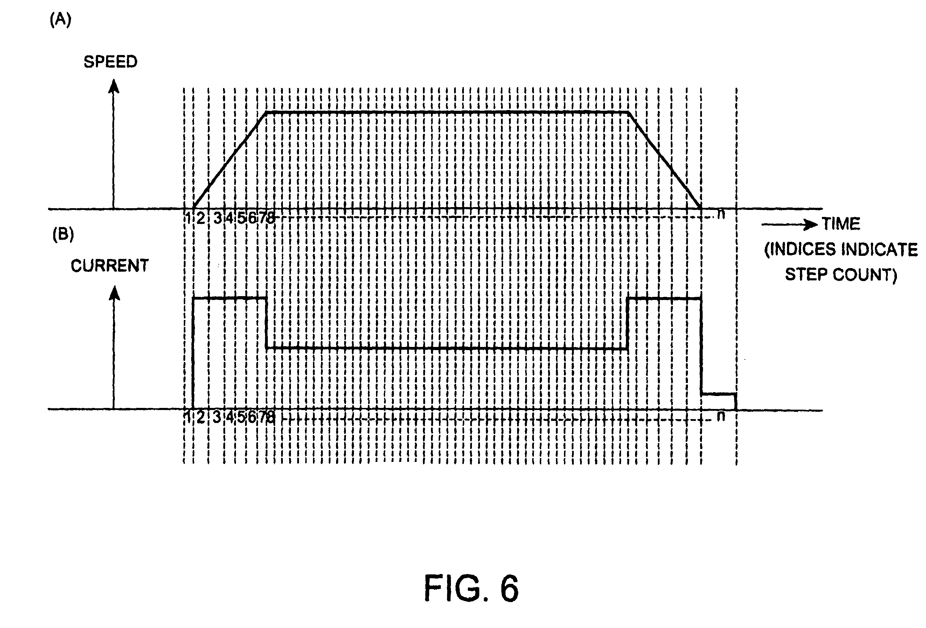

Fig. 6 is a graph showing an example of a typical control sequence of a stepping motor. Controlling a stepping motor requires sequentially changing the phase of current applied to the motor. As shown in Fig. 6 (A), it is necessary to gradually accelerate the motor from its start until the motor speed reaches a certain value, then maintain the speed at this value, and finally decelerate the motor when a desired stop position is approached. The timing of phase changes during acceleration differs from that of constant speed operation and deceleration. Current control is also necessary during each of acceleration, constant speed operation, and deceleration.

To start the motor, it is necessary to provide a high current to start and accelerate motor rotation (see Fig. 6 (B)). Less current is needed to maintain constant speed operation, but a high current must be provided again during deceleration in order to brake the motor. It should be noted that, as shown in Fig. 6 (B), a current flow to the motor is maintained even after the motor stops although it is very low. This is to quickly dissipate any residual excitation of the motor, and a weak current flows to the motor in all phases after the motor stops (this is known as "rush current"). Therefore, after the motor reaches the stop position, the final control data including the rush current phase pattern (all phases), rush current, and rush current supply time is sent to the drive controller 6, and the motor drive operation ends after the rush current supply time has passed.

The numbers below the abscissa each in Fig. 6 (A) and (B) indicate the phase change timing. As shown in Fig. 6, rotation of motor 7 starts with the second phase change timing.

The timing data and other control data, including all control data needed to successively control motor 7 from acceleration, constant speed operation, deceleration, to stopping according to the scheduled drive amount is generated by the CPU 1 before motor drive starts, and is stored in data tables 10 to 12 in memory 2.

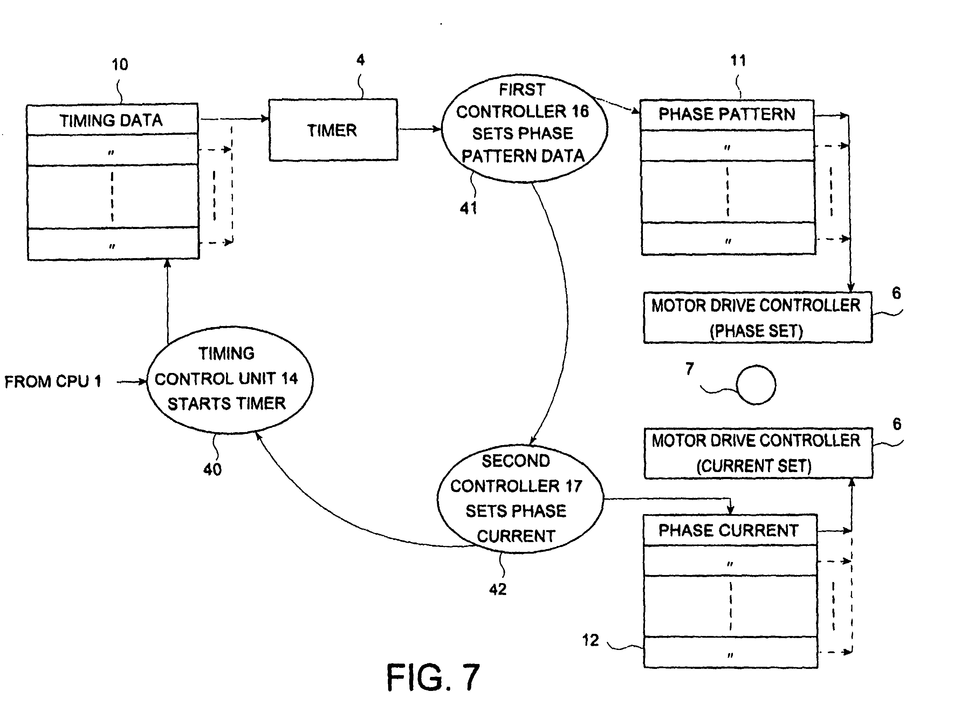

This is described in further detail with reference to Fig. 7 below. Fig. 7 shows the state transitions of the control sequence starting from receiving a start motor drive request to setting the change timing data, phase pattern data, phase current data, and then setting the next change timing data.

When the control start by CPU 1 is indicated, timing control unit 14 reads, from timing data table I 10, the timing data of the first data set that define the phase change timing, and sends this data to timer 4. The timer 4 monitors passage of the specific time interval based on the received timing data (state 1: 40).

When timer 4 detects passage of the specific time interval, first controller 16 reads the phase pattern data of the first data set from first control data table 11, and sends the phase pattern data to drive controller 6 (state 2: 41).

When sending the phase pattern data ends, second controller 17 reads the phase current data of the first data set from second control data table 12, and sends the first phase current data to the drive controller 6. Once the phase current data is set motor drive starts (state 3: 42).

When sending the phase current data ends, timing control unit 14 is driven again, and reads and sends the timing data of the next data set to timer 4 (state 1: 40). When timer 4 detects passage of the specific time interval, DMA unit 15 sends the phase pattern data (state 2: 41) and subsequently the phase current data (state 3: 42) of this next data set to drive controller 6. Drive based on the control data of this next data set thus begins.

As will be understood from the above, the timing data of an arbitrary i-th data set defines a time interval (counting from the moment the timing data is set in the timer 4) after which the phase pattern data and phase current data of the i-th data set are to be set. The motor 7 operates at the phase pattern and phase current of that i-th data set until the time interval specified by the timing data of the (i+ 1)-th data set has passed and the phase pattern is changed again. The motor 7 is then driven according to the phase pattern and phase current data of the (i + 1)-th data set until the time interval specified by the timing data of the (i+2)-th data set has passed, and so on.

Motor 7 thus starts rotating at the second timing point (start of the second time interval) as indicated in Fig. 6 (A), and the motor is thereafter controlled according to the specified timing data and control data.

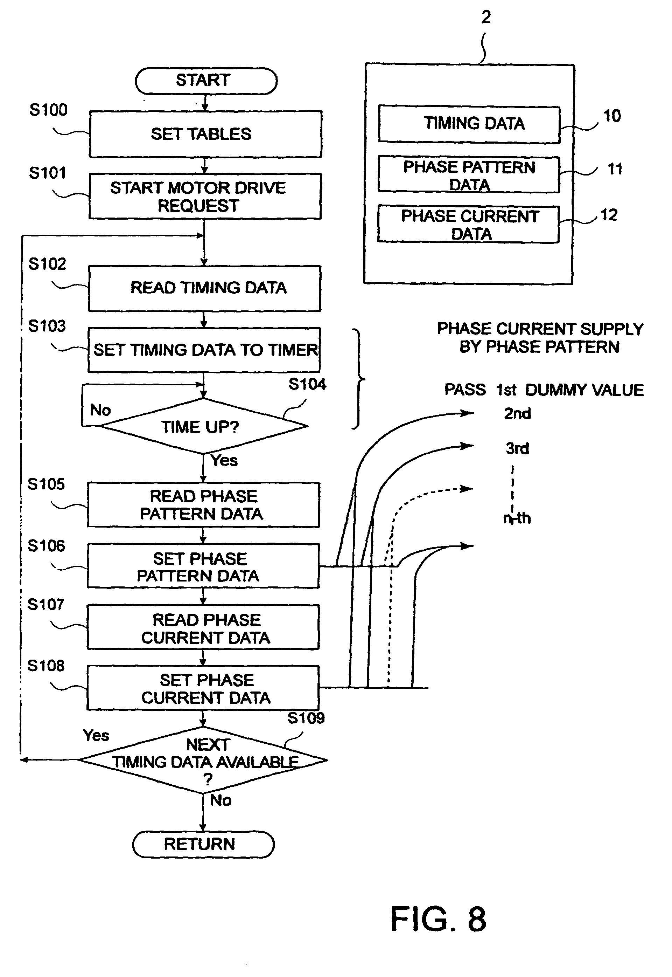

Fig. 8 is a flow chart describing this motor control process.

When drive of motor 7 is requested by a program, for example, CPU 1 computes the phase change timing data (time intervals in this example) required for control from the start to the stop of the control process, and the phase pattern and phase current data to be set at each changing timing, and stores this data in the tables 10 to 12 at respective addresses in memory 2 (S100). The CPU 1 then sends a start motor drive request to timing control unit 14 (S101).

In response to the start drive request from CPU 1, timing control unit 14 reads the first timing data (timing data of the first data set) from the timing data table in memory 2 (S102), and sets it into timer 4 (S103). The timer starts counting upon the timing data being set, and this state continues (S104 returns no) until the specified time interval has passed and the timer outputs a time-up signal to first controller 16. When the time-up signal is output (S104 returns yes), first controller 16 reads and sends the first phase pattern data (those of the first data set) from the phase pattern data table in memory 2 (S105) to drive controller 6 (S106).

When sending the phase pattern data ends, second controller 17 reads the first phase current data (those of the first data set) from the phase current data table (S107), and sends the phase current data to the drive controller 6 (S108). Phase current thus flows to motor 7, and motor starts rotating.

If there is another data set, i.e., timing data for a next phase change (S109 returns yes), timing control unit 14 reads the next (second) timing data from the timing data table and passes it to timer 4 (S102, S103). The timer starts counting again (S104) until the counted time interval has passed (S104 returns *Yes*). In other words, the phase pattern and phase current as determined by the control data of the first data set are applied to the motor 7 for the time interval indicated by the timing data of the subsequent (second) data set.

When timer 4 detects the time interval has passed (S104 returns yes), the next (second) phase pattern and phase current data are set into drive controller 6 (S105 to S108), and current flows for the time interval determined by the third timing data according to these phase pattern and phase current data (S102 to S104). The same steps S102 to S109 thereafter repeat based on the timing data from the timing data table. This process ends when there is no more next timing data in the timing data table.

**Third Embodiment**

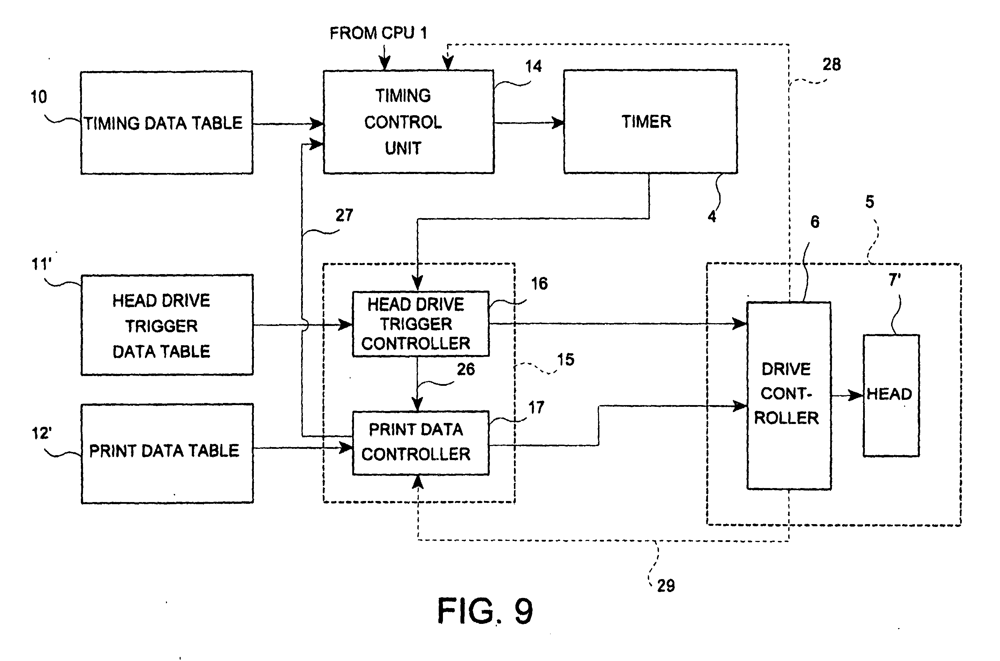

A third embodiment of the present invention is described next with reference to Fig. 9. The third embodiment applies the principles of the first embodiment to a drive mechanism for driving a print head in a printer. Fig. 9 is a function block diagram of a drive control device for controlling the print head. The timing control unit 14, first controller 16, and second controller 17 in Fig. 3 serve as drive timing control unit, head drive trigger controller, and print data controller, respectively. As in the case shown in Fig. 3, these elements are preferably parts of one DMA controller, and are shown as separate function blocks for ease of understanding only. Drive controller 6 is a head drive controller and the driver is the print head 7' in this embodiment.

The basic operation of this third embodiment is the same as that described above with reference to the second embodiment, but the processed control data differs. More specifically, the timing data is head drive timing data and the control data comprises head drive trigger data in data table 11' and print data in data table 12'. This data is written to respective tables by the CPU before drive starts.

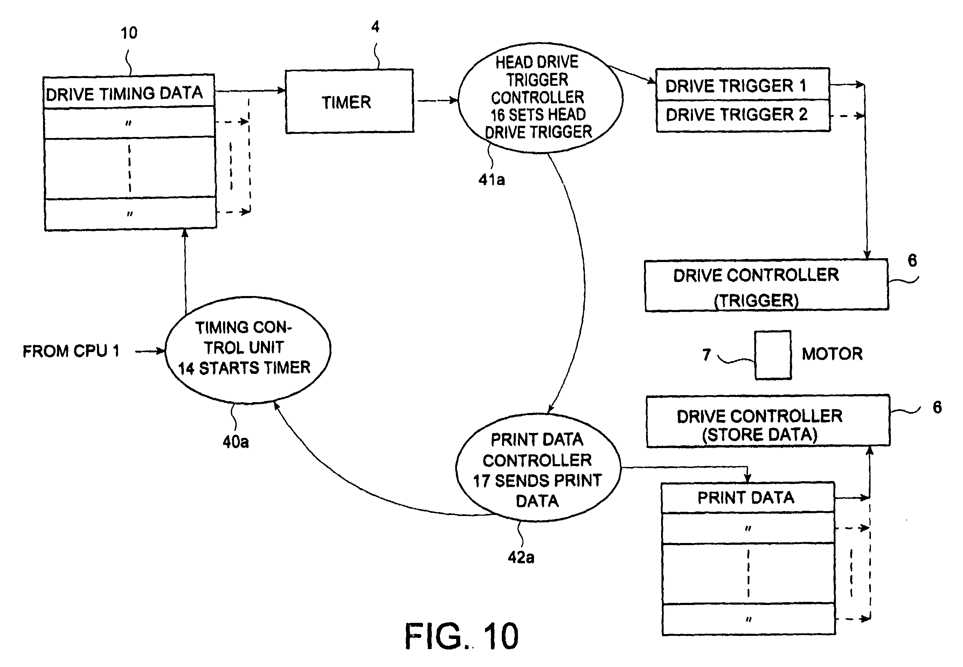

The basic operation is described next with reference to Fig. 10.

The timing control unit 14 first sets the (head drive) timing data into timer 4 (state 1: 40a). When the timer 4 times out, first controller 16 sends a drive trigger signal to the drive controller 6 to drive the print head (state 2: 41a). As will be appreciated from the description that follows, nothing is printed at this time because no print data has been sent yet. Next, second controller 17 sends, for example, one dot line of print data to drive controller 6 (state 3: 42a). Note that the amount of print data sent is preferably the amount of data that can be printed in one head drive (printing) operation. The drive controller 6 stores the received print data and causes the print head 7' to print it when the next drive trigger signal is received.

It should be noted that second and third embodiments have been described separately. It will be understood the both embodiments can be combined and the motor drive control of the second embodiment used to drive a paper transport mechanism, the carriage mechanism, etc. in the printer. Note further that if the motor of the second embodiment is used for driving anything other than the carriage mechanism, the second embodiment, this third embodiment and the following fourth embodiment could be combined in a single printer.

In case of a combination of the second and third embodiments, the drive controller 6 in Fig. 5 and the drive controller 6 in Fig. 9 can be made to operate in conjunction with each other as may be required. It is, thus, possible to separately apply the present invention to head drive control device and motor drive control device, and synchronize the operation of these two control devices. Operation can be synchronized by, for example, synchronizing the control data for the motor drive mechanism and the head drive mechanism when the control data is generated and storing the synchronized control data in memory so that actual drive is controlled based on the already-synchronized control data. Other methods could also be used, including synchronizing motor drive timing to the actual head drive timing, or otherwise synchronizing the timing to actual operation.

In the configuration described above next timing and control data is read and output after sending the previous timing and control data is completed. It is also possible to simultaneously send timing data and control data depending on the properties of the respective driver.

**Fourth Embodiment**

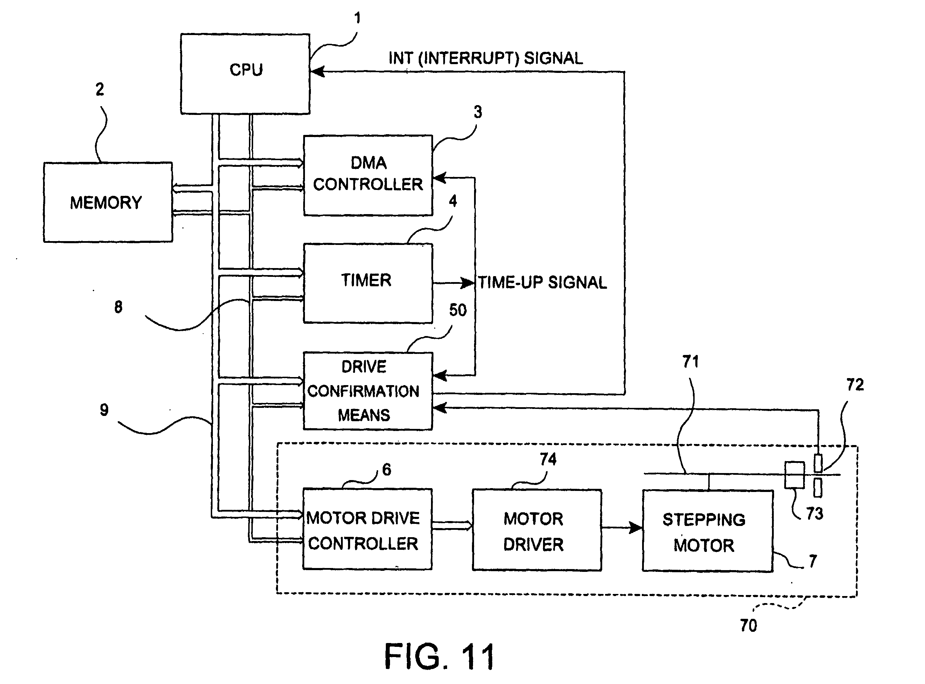

A fourth embodiment of a drive control device according to the present invention is described next with reference to Fig. 11 showing a schematic block diagram of this embodiment. The drive mechanism in this embodiment is a carriage drive mechanism for reciprocating the print head of a serial printer horizontally along a print line. Like reference numerals are used in Figures 1 and 11 to denote like parts and those parts will not be explained again.

The carriage drive mechanism 70 comprises a motor drive controller 6, a motor driver 74 (note that such motor drive will normally be included in the drive mechanism 5 of Fig. 5 although not shown there), and a stepping motor 7 for driving a carriage 73 via a power transfer mechanism 71 (comprising a toothed belt, gears, or other means). Carriage position and movement are precisely controlled by precisely changing the phases of motor 7.

When timing data is sent from memory 2 to timer 4, timer 4 counts the time interval corresponding to the received timing data, and outputs a time-up signal to the DMA controller 3 when that time interval elapses. DMA controller 3 then sends specific data from memory 2 to drive controller 6 of drive mechanism 70. The drive controller 6 drives the motor driver 74 according to this control data, and the stepping motor 7 turns. When the stepping motor 7 turns, carriage 73 is moved via the power transfer mechanism 71.

A home position sensor 72 is disposed in the carriage path at the home position (HP) of the carriage movement range. This HP detector 72 can be a photodetector, ultrasonic detector, mechanical sensor, or other sensing means.

The output signal from the HP detector 72 is applied to drive confirmation means 50. The drive confirmation means 50 sequentially tracks the logical (computed) carriage position and detects any offset between the actual carriage position and the logical carriage position when the HP detector 72 detects the carriage. If the offset exceeds a specified range, an interrupt signal is sent to the CPU. When the CPU detects the interrupt signal from the drive confirmation means 50, it runs a specific error handling process.

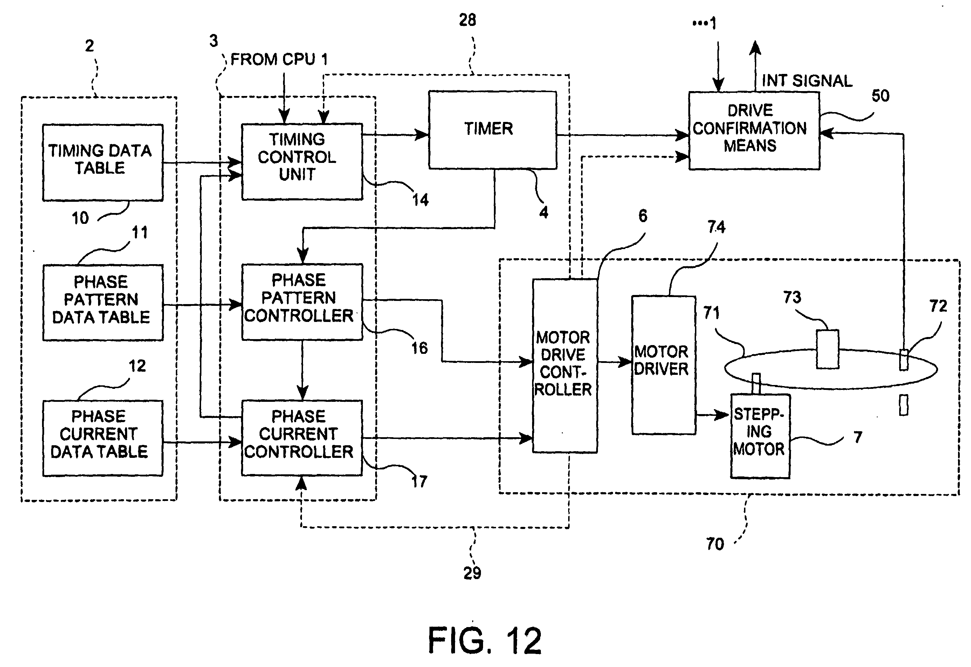

The embodiment shown in Fig. 11 is described in further detail with reference to Fig. 12. Fig. 12 is a function block diagram describing the operation of the drive control device and carriage drive mechanism in greater detail. Note that timing and control data tables 10 to 12 are disposed in memory 2 in Fig. 12. The data stored in these tables is the data needed to control the motor according to the desired movement of the carriage. The timing and control data is generated according to a motor control program (not shown in the figure) and stored in memory 2 before the motor drive operation starts.

Referring to Fig. 12, timing data table 10 stores the timing data controlling the timing at which motor operation switches. Phase pattern data table (first control data table) 11 stores the phase pattern data of the current supplied to the motor at each change of operation, and phase current data table (second control data table) 12 stores the phase current data controlling the phase current flow to the motor at each change of operation.

It should be noted that Fig. 12 shows two types of control data being stored, but more or less types of control data can be stored as may be needed. Furthermore, this data can be stored in a register or other storage means rather than in memory 2.

Data tables 10 to 12 are read respectively by a phase change timing control unit 14, a first controller (phase pattern controller) 16, and a second controller (phase current controller) 17, all included in DMA controller 3. The read data is passed to timer 4 and drive controller 6 as with the preceding embodiments. The first send operation of the DMA controller 3 is activated by a start signal from CPU 1. Thereafter, the timing control unit 14 and the controllers 16 and 17 are sequentially made active to read and send the respective data controlled by timer 4 as has been explained previously.

Timing data is first sent by timing control unit 14 from timing data table 10 to timer 4. After the time interval indicated by the timing data has passed, timer 4 outputs a time-up signal to first controller 16 and also to drive confirmation means 50. When it receives the time-up signal, first controller 16 reads phase pattern data from phase pattern data table 11 and sends the data to drive controller 6. The drive controller 6 outputs the received phase pattern data to motor driver 74. Next, second controller 17 reads phase current data from the phase current data table 12 and sends it to drive controller 6. The drive controller 6 outputs the received phase current data to motor driver 74, and the motor 7 then starts turning. When the motor 7 starts turning, power transfer mechanism 71 causes carriage 73 to begin travelling through the carriage path.

When sending the phase current data ends, second controller 17 passes control to timing control unit 14. The timing control unit 14 thus reads the next timing data and sends it to timer 4. The timer 4 outputs a time-up signal when the specified time interval has passed, making first controller 16 active to send the next phase pattern data. The same process thereafter continues so that motor 7 gradually accelerates and moves carriage 73.

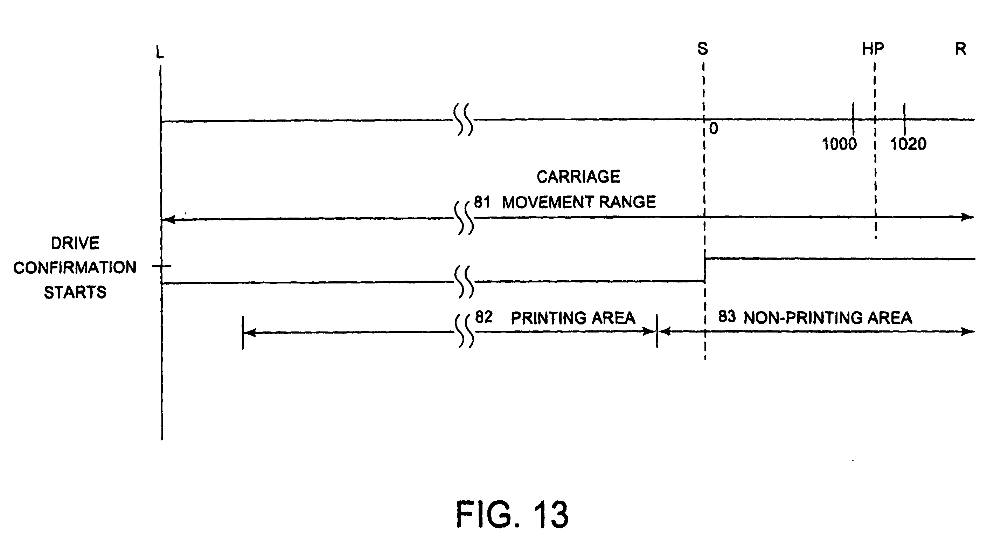

The carriage path is described next with reference to Fig. 13. Fig. 13 shows the carriage movement range 81, printing area 82, non-printing area 83, and home position location of a typical serial printer. The greatest part of the carriage movement range is printing area 82. Printing is accomplished by the print head (not shown in the figure) as the carriage 73 travels through the printing area 82. The printing area 82 differs depending on the type of printer, for example, and for simplicity only one printing area 82 is shown in Fig. 13. A specific area contiguous to the right end of the printing area is non-printing area 83. The carriage 73 can travel through the non-printing area 83, but printing is prohibited.

Home position detector 72 (equivalent to a location sensor) (see Fig. 11 and Fig. 12) is disposed at a particular position (equivalent to a first reference position) known as the home position (abbreviated "HP") in the non-printing area 83. When the carriage 73 moves across the home position sensor, the home position sensor detects the carriage 73 and thus makes it possible to confirm if the carriage 73 has actually moved to the home position. The HP detector 72 outputs a detection signal to the drive confirmation means 50 when it detects the carriage.

The carriage 73 is moved by driving the motor 7. To print one continuous line, for example, carriage 73 moves from the right end of the printing area 82 to the left end of the printing area. When printing is completed, the carriage 73 can stop at that position, return to the right end of the printing area, or move to some other desired position.

As noted above, moving carriage 73 for printing is accomplished by generating and storing in memory timing and control data required for a desired movement; the stored control data is then read by a DMA controller and sent to the drive controller. Generating and storing the timing and control data can be accomplished by means of a CPU and specific program.

As is the case for printing, a carriage drive operation performed to confirm whether it is correctly accomplished ("drive state confirmation process" below) is also achieved by first generating and storing timing and control data, and then sequentially reading and sending this data by means of a DMA controller to the drive controller. This drive state confirmation is preferably performed at a regular interval in order to achieve precise drive control.

In the case of an ink jet printer, for example, a dummy (cleaning) ink ejection operation is performed regularly when no printing is effected in order to prevent the print head's nozzles from being clogged by dried ink when there is a long interval between printing operations. The carriage is therefore moved regularly (every 6 to 10 seconds, for example) to an ink receiving position at which ink is ejected to an ink receptacle. The ink receptacle is normally disposed near the home position in the non-printing area 83. The drive state confirmation process can therefore be combined with the dummy ink ejection operation. It should be noted that while the carriage drive operation is the same for both processes, the drive state confirmation process must be performed parallel to print head control for ink ejection.

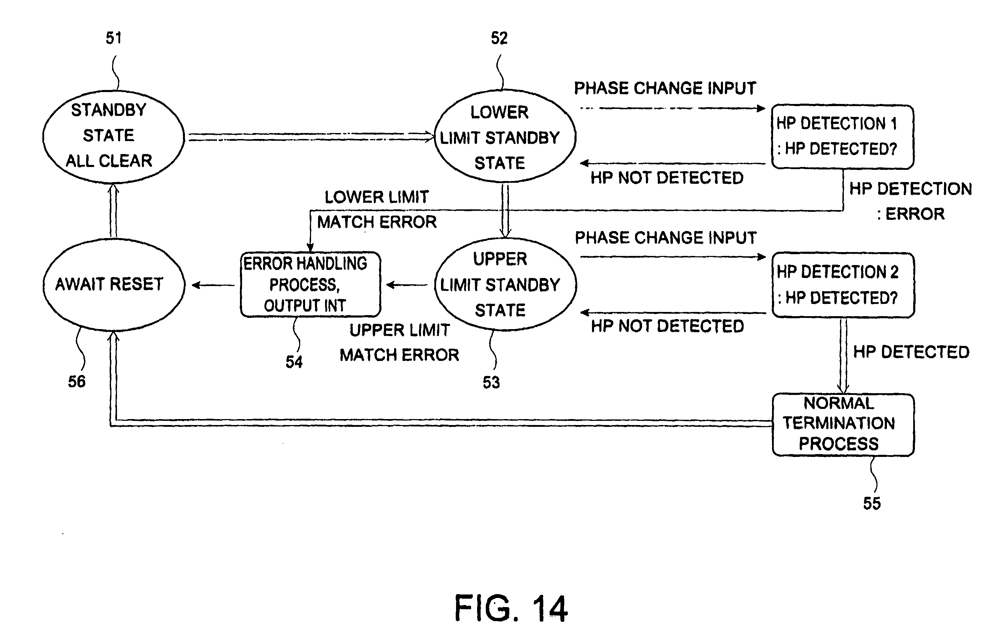

An example of the drive state confirmation process is described next with reference to Fig. 14. Fig. 14 is a state transition diagram for describing this drive state confirmation process.

Typical carriage movement in conjunction with drive state confirmation is described briefly before describing the process in Fig. 14.

The carriage is first stopped at a second reference position (S in Fig. 13) in the standby mode. Control and timing data for the drive state confirmation operation is generated in this state and stored in memory. When the CPU then outputs a start signal to the DMA controller 3, the DMA controller reads the control data from memory and sends it to the timer and drive controller, respectively. Drive control of motor 7 thus starts. When the motor is driven, carriage 73 moves gradually to the right from the second reference position S. When the carriage passes the home position, the home position sensor outputs a detection signal. The drive state is confirmed based on the detection signal from the home position sensor.

The drive state confirmation process is described next. All flags and counters, etc. are cleared in standby state 51 when the drive state confirmation process is not running. To start the drive state confirmation process, CPU 1 generates timing data and control data in order to move the carriage 73 to the home position HP for the drive state confirmation process, and stores this data in tables 10 to 12. After this data is stored, CPU 1 activates timing control unit 14 of DMA controller 3 (see Fig. 12), and starts motor drive control to move the carriage. The signal starting drive control simultaneously starts the drive state confirmation process and enters the lower limit standby state 52 shown in Fig. 14.

Whether the computed logical position of the carriage 73 has reached a lower limit value allowed for the logical position when the actual position is the home position HP, is checked in this lower limit standby state 52. If the HP detection signal is detected before the logical position of the carriage 73 reaches the lower limit value, the actual carriage position is known to be offset greatly to the right (as seen in Fig. 13) from the logical carriage position, and a drive error is determined to have occurred. Whether the home position HP is detected before the logical position reaches the lower limit value is therefore determined (HP detection 1). A drive error is detected if the home position HP is detected before the logical carriage position reaches the lower limit value, and an interrupt signal is output to the CPU 1 for an error handling process (error handling process, output INT state 54). If the home position HP is not detected in HP detection 1, lower limit standby state 52 continues.

If the logical position reached the lower limit value with no HP detection signal having been detected, an upper limit standby state 53 is assumed. Whether the logical position of the carriage 73 has reached an upper limit value allowed for the logical position when the actual position is the home position HP, is checked in this upper limit standby state 53. If the HP detection signal is not detected by the time the logical position of the carriage 73 reaches the upper limit value, the actual carriage position is known to be to offset greatly to the left (as seen in Fig. 13) from the logical carriage position, and a drive error is determined to have occurred.

To detect this state, whether the home position HP is detected it is checked at each phase change time until the logical position reaches the upper limit value (HP detection 2). If the home position HP is not detected by the time the upper limit value is reached, an interrupt signal is output to the CPU 1 to activate the CPU 1 and run a specific error handling process (state 54). If an error interrupt is applied to the CPU 1, the CPU 1 indicates a drive error, runs an appropriate error handling process, and waits for recovery from the error (state 56).

If the home position HP is detected in HP detection state 2, the offset between the logical carriage position and the actual carriage position is known to be within an acceptable range, and a normal termination process 55 is run to normally terminate the drive state confirmation process. This normal termination process 55 can, for example, drive the carriage to the right end of the printing area 82 after home position HP detection and re-enable printing (state 56).

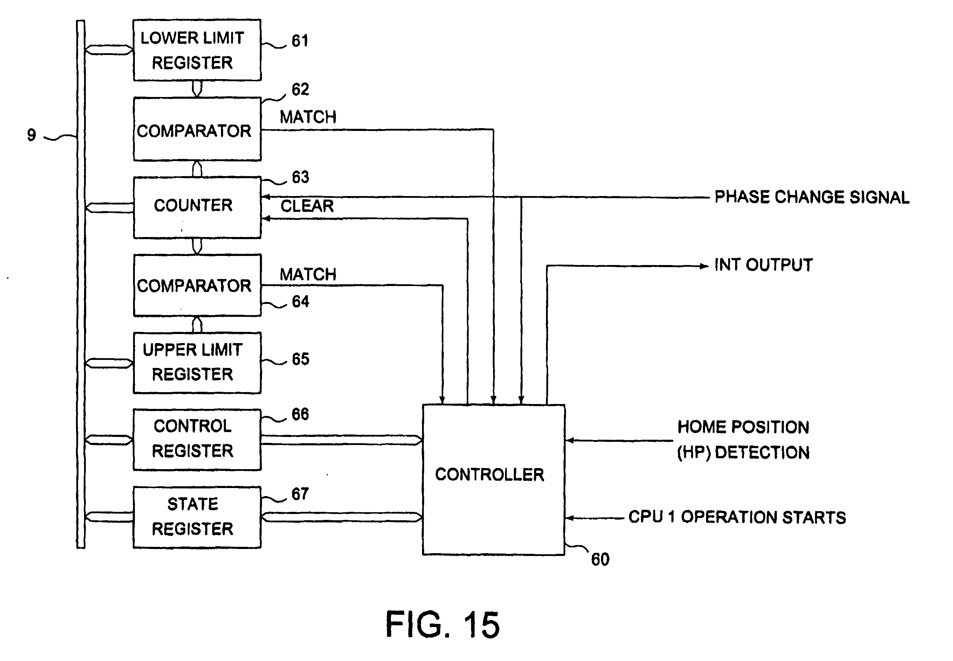

Fig. 15 is a function block diagram of an exemplary drive confirmation means 50 according to the present invention.

The drive confirmation means 50 has a lower limit register 61 for storing the allowable lower limit value, and an upper limit register drive 65 for storing upper limit value. The lower and upper limit values are stored in lower limit register 61 and upper limit register 65, respectively, by CPU 1 via data bus 9. The drive confirmation means 50 also comprises a counter 63, which counts up the phase change signals (time-up signals). The counter 63 is cleared by a signal from a controller 60 before the drive state confirmation process is started. The count value of counter 63 is compared by comparators 62 and 64 with the values in lower limit register 61 and upper limit register 65, respectively. If the count value of counter 63 matches the value in lower limit register 61 or that in upper limit register 65, a match signal is output to the controller 60.

The controller 60 operates according to data stored in a control register 66, and after the drive state confirmation process has been executed its state (the result) is stored in state register 67. Data from CPU 1 is written to control register 66, and CPU 1 can read from state register 67. CPU 1 can also read the current count value from counter 63 via data bus 9. The match signal, phase change signals (time-up signals), home position signal HP, and others are input to controller 60, which detects drive errors based on the match signal output timing from comparator 64 and the timing at which home position signal HP is received.

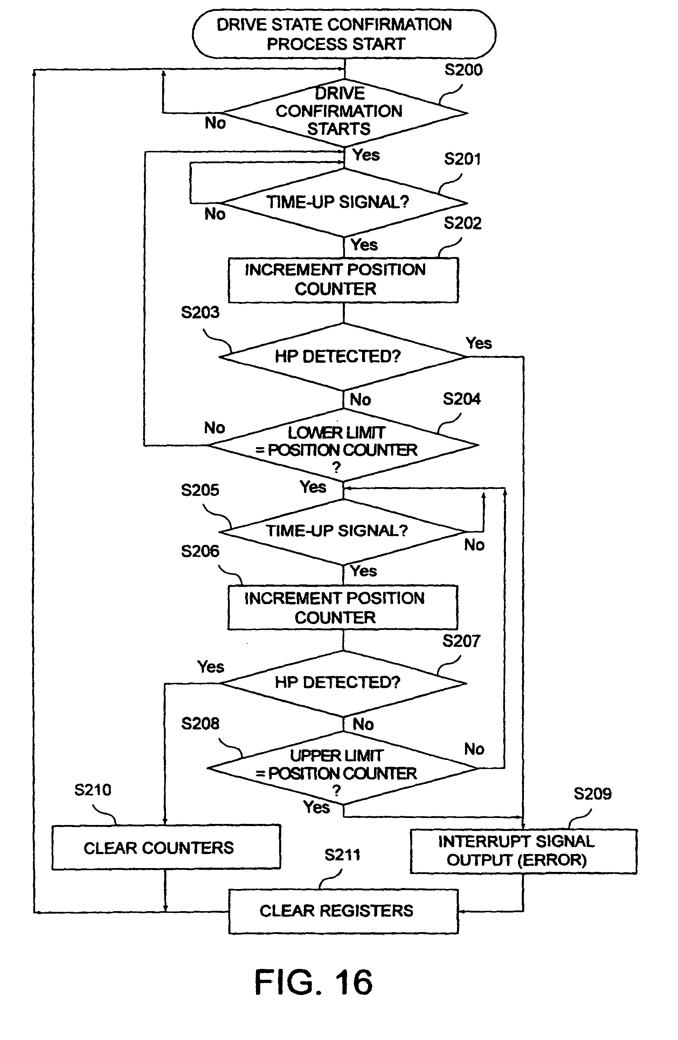

The operation of controller 60 is described next with reference to Fig. 13, Fig. 15, and Fig. 16. Fig. 16 is a flow chart showing the drive state confirmation process of the controller 60 of drive confirmation means 50. Let us assume that carriage 73 is initially stopped at position S in Fig. 13.

Before starting the drive state confirmation process, CPU 1 writes the timing and control data into memory 2 as described above. At the same time CPU 1 also clears lower limit register 61, upper limit register 65, control register 66, and counter 63. The values set into upper limit register 65 and lower limit register 61 can be freely determined according to the desired degree of error detection precision. In this example the lower limit position is set to "1000" in lower limit register 61, and the upper limit position is set to "1020" in upper limit register 65.

When CPU 1 activates timing control unit 14 in DMA controller 3, it also activates drive confirmation means 50 at the same time (S200). Based on timing data from timing control unit 14 (see Fig. 12), timer 4 outputs a time-up signal at each phase change timing. Based on the time-up signal, first controller 16 and second controller 17 send the phase pattern and phase current data to drive controller 6. The drive controller 6 then drives motor 7 based on this control data, and carriage 73 begins moving toward home position HP.

Once drive confirmation means 50 starts the drive state confirmation process, counter 63 is incremented each time timer 4 outputs the time-up signal (S201, S202). Whether HP detector 72 outputs a detection signal is then checked (S203 returns no). If the HP detection signal is not output, the values from counter 63 and lower limit register 61 are compared (S204). If the value of counter 63 has not reached the lower limit value (S204 returns no), the same process is repeated (that is, steps S201, S202, S203, and S204).

Note that detection of the HP detection signal at this time means that the carriage 73 has actually reached the home position HP even though the logical position of carriage 73 has not reached the lower limit setting of 1000. An error is therefore detected (S203 returns yes) and an interrupt signal is output to CPU 1 (S209). The registers 61, 65 are then cleared (S211) and a standby state is assumed (S200). Note that the CPU 1 can reference the contents of counter 63 and state register 67 by means of an interrupt error handling process.

When the count value of counter 63 reaches 1000, the value in lower limit register 61 and the count value of counter 63 value match (S204 returns yes). The upper limit standby state 53 (see Fig. 14) is therefore assumed and the next time-up signal is awaited (S205 returns no). When a time-up signal is received (S205 returns yes), counter 63 is incremented (S206), and whether the HP detection signal is output is checked (S207). If the HP detection signal is not output (S207 returns no), the value in upper limit register 65 is compared with the count value of counter 63 (S208). If they are not the same (S208 returns no), the same process steps are repeated (that is, S205, S206, S207, S208).

If the HP detection signal is detected (S207 returns yes), carriage 73 has reached the actual home position HP within the range

$$\text{lower limit (1000)} < \text{logical position (count value)} < \text{upper limit (1020)}.$$

The logical and actual carriage positions are thus within a specific tolerance range, drive is determined to be normal, counter 63 and register 65 are cleared (S210), and standby state 51 (see Fig. 14) is assumed.

If the count value reaches 1020, the value set into upper limit register 65 and the count value of counter 63 match (S208 returns yes). This means that even though the carriage should have moved to the logical upper limit position 1020, it has not actually reached the home position. A drive error is therefore detected.

If an error is determined after the home position HP is detected, an interrupt can be issued to the CPU 1, which then stops driving motor 7, or motor 7 can be driven to a specific position to enable error recovery. To terminate the process normally, the timing and control data generated and stored in memory 2 for the drive state confirmation process can include data for returning the carriage to a specific position (such as the second reference position shown as S in Fig. 13) if the step count (identical to the count tracked by counter 63) exceeds the upper limit 1020 or 1021.

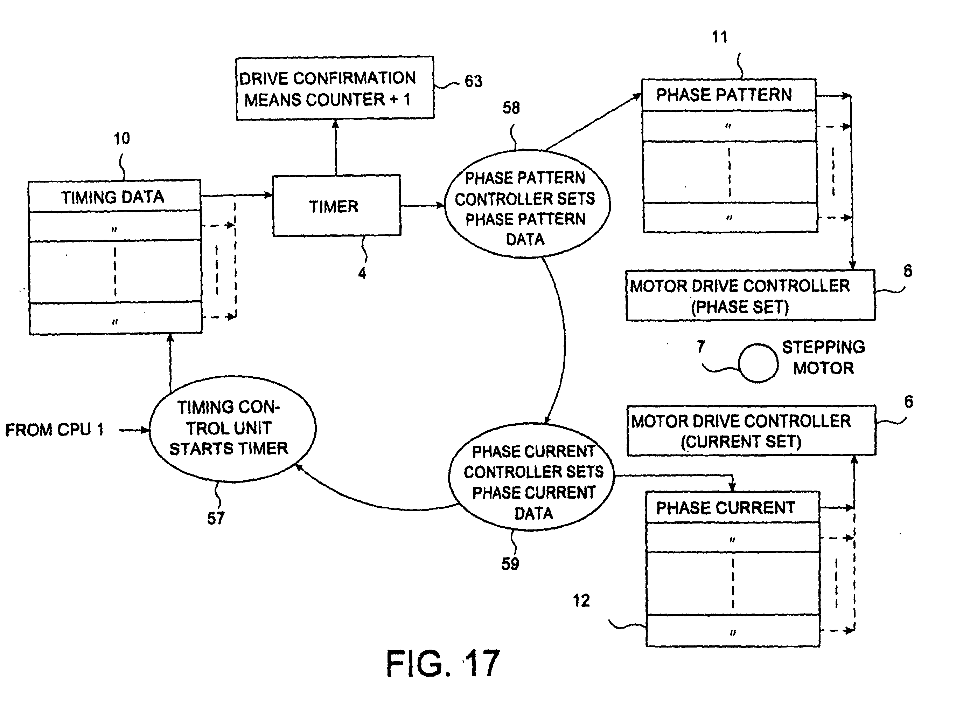

The relationship between carriage drive control (motor drive control) and the drive confirmation means is described next with reference to Fig. 17 and Fig. 12.

Fig. 17 shows the state transitions of the continuous control loop starting from receiving the start motor drive request to setting the change timing data, phase pattern data, phase current data, and then setting the next change timing data, and the relationship of the drive state confirmation process to this operation.

When the start of drive control for the drive state confirmation process is indicated by CPU 1, the first timing data in timing data table 10 is read and sent to timer 4. The timer 4 monitors passage of the specific time interval based on the received timing data (state 1: 57).

When timer 4 detects passage of the specific time interval, it outputs a time-up signal. Based thereon, first controller 16 reads the first phase pattern data from phase pattern data table 11, and sends the phase pattern data to drive controller 6 (state 2: 58). Drive confirmation means 50 increments its counter 63 at the same time also based on the time-up signal.

When sending the first phase pattern data ends, second controller 17 reads the first phase current data from phase current data table 12, and sends the phase current data to drive controller 6. Motor 7 starts turning when this is completed (state 3: 59).

When sending the phase current data ends, timing control unit 14 is driven again to read the next timing data from timing data table 10 and send it to timer 4 (state 1: 57). Motor 7 continues to be driven based on the first phase pattern and phase current data until the timer 4 outputs a time-up signal based on the second timing data.

When timer 4 detects the specific time interval has passed, it outputs a time-up signal. Based thereon, first controller 16 reads the next (second) phase pattern data and sends it to drive controller 6 (state 2: 58). Drive confirmation means 50 increments counter 63 at the same time based on the time-up signal. The next (second) phase current data is then read and sent by second controller 17 (state 3: 59). The motor 7 is thus driven based on the second phase pattern and phase current data until the next (third) time-up signal is output.

As will be understood from the above, the first timing data is a dummy value for setting the first phase pattern and phase current data. The motor 7 is driven with this first phase pattern and phase current until the time interval specified by the second timing data has passed and the phase pattern is changed. Likewise, the motor 7 is next driven based on the newly set phase pattern and phase current until the next phase change time.

Motor 7 drive thus starts from the second phase change time as shown in Fig. 6 (A), and the motor is controlled according to specific timing data and control data. The counter 63 of drive confirmation means 50 is incremented each time the time-up signal is output, and the count value is compared with the values in the lower limit register 61 and the upper limit register 65.

It should be noted that the above described drive confirmation operation is controlled by a program stored in memory. In a printer, for example, a home position sensor is normally disposed at a location separated from the printing area, and the carriage is driven so that it is detected by the home position sensor at least once every unit time to confirm carriage operation. The frequency of this drive state confirmation process can be freely determined by the designer when writing the drive control program. For example, by regularly performing this operation at a specific interval, the timing of the confirmation process can also be changed according to actual drive mechanism operation.

Furthermore, when the first reference position is set to the home position remote from the printing area, an error can be immediately detected if the home position is detected while printing is in progress. However, it will also be appreciated that the first reference position is not necessarily outside the printing area. A first reference position can be set inside the printing area with a sensor disposed there so that the drive state confirmation process can be accomplished while printing.

Moreover, plural position sensors with corresponding drive confirmation means can also be provided. For example, position sensors could be disposed at both sides of the path of movement, more than one could be disposed in the printing area, or sensors could be disposed at both sides of the path of movement and within the printing area. Thus providing plural position sensors and drive confirmation means enables even more detailed, precise confirmation of drive control, and can further improve reliability.

Furthermore, a dummy ink ejection operation is performed at a regular interval in an ink jet printer to ensure normal printing. Therefore, by disposing a receptacle for the ink ejected by this dummy ejection near the home position, carriage drive for the dummy ink ejection can also be used for the drive state confirmation process.

It should be noted that the above drive state confirmation process has been described with reference to a carriage drive mechanism for a printer, but the invention is not limited to this case. For example, the concept of the present invention, regarding both the drive control and drive state confirmation process, can be applied to virtually any field requiring precision drive mechanism control, including a printing paper transport mechanism, a bill transport mechanism in an ATM, a magnetic head or other type of head drive mechanism, card readers and scanners. It will be understood that the location of the first and second reference positions should be appropriately determined based on knowledge and practice in the respective field.

Moreover, the preceding embodiments have also described a stepping motor drive mechanism and print head drive mechanism. As noted above, however, the invention can also be applied to other drive mechanisms, such as those using a linear motor, ultrasonic oscillators, electromagnets, or a combination of these. Furthermore, control data specific to these drive mechanisms can be supplied at timings specific to the drive mechanism using the DMA control of the present invention so that once driving starts drive mechanism control can continue without involving the CPU.

**Claims**

1. A drive control device for controlling a drive mechanism (5, 70) including drive control means (6) and drive means (7; 7'; 7, 74) controlled by the drive control means (6), comprising:

    data generating means (1) for generating plural data sets each including control data for controlling the drive means (7; 7'; 7, 74) and associated timing data for controlling the time at which the control data are output to the drive control means (6), and for outputting a first start signal for starting data transmission to the drive control means (6);
    storage means (2) for storing the timing data and control data;
    timer means (4) for starting a timing operation when it receives timing data and for outputting a time-up signal when a time specified by the received timing data passes;
    first direct memory access means (14) responsive to said first start signal for reading timing data from the storage means (2) and sending the read timing data to the timer means (4); and
    second direct memory access means (15), responsive to said time-up signal for reading control data from the storage means (2) and sending the control data to the drive control means (6)

    **characterized in that**
    the second direct memory access means (15) comprises means for outputting, when the sending of the control data of one data set is completed, a second start signal; and
    the first direct memory access means (14) is responsive to said second start signal for reading the timing data of the next data set from the storage means (2) and sending it to the timer means (4).

2. The device of claim 1, wherein said control data in each data set comprises first and second types of control data and the second direct memory access means (15) further comprises:

    a first control unit (16) responsive to said time-up signal for reading the first type control data of a respective data set from the storage means (2) and sending it to the drive control means (6); and
    a second control unit (17), activated by the sending of the first type control data to the drive control means (6) being completed, for reading the second type control data of said respective data set, sending it to the drive control means (6), and then outputting said second start signal.

3. The device of claim2, wherein the drive means comprises a stepping motor (7);

    the timing data is timing data for controlling a phase change timing of the motor (7); and

**EP 1 154 341 B1**

the control data is phase pattern data set when the motor phase changes, and phase current data for controlling current supplied to the motor (7) when the motor phase changes.

4. The device of claim 3, wherein the data generating means (1) is adapted to generate the timing data, first type control data, and second type control data based on basic timing data, phase pattern data, and phase current data for use during motor acceleration, deceleration, and constant speed operation.

5. The device of claim 2, wherein the drive means comprises a print head (7'); and the timing data is data for controlling the head drive timing, and the control data comprises drive trigger data for actually driving the head and print data.

6. The device of claim 1, wherein said drive means (7, 74) is means for moving a movable member (73), further comprising:

    a position detection means (72) for outputting a position detection signal when the movable member (73) reaches a first reference position (HP); and
    a drive confirmation means (50) for computing a logical operating position of the movable member (73) from the output control data, confirming drive unit operating status by comparing the logical operating position with the actual operating position based on the detection signal, and outputting an operating error signal when a mismatch is detected between said logical and actual operating positions.

7. The device of claim 6, wherein the drive confirmation means (50) comprises a comparison data storage unit (61, 65) storing a comparison value;

    a counter (63) that is initialized at a second reference position (S) of said movable member (73) for counting each of said time-up signals; and
    a comparator (64) for comparing the count value of the counter (63) with said comparison value;
    the operating status of the drive means (7; 7'; 7, 74) being determined based on the comparator output when the position detection signal is received.

8. The device of claim 7, wherein the comparison data storage unit (61, 65) comprises

    a first and second comparison data storage units for storing a lower and an upper limit value, respectively, for the count value said counter (63) counted while said movable member (73) moves from the second reference position (S) to the first reference position (HP);
    the drive confirmation means (50) outputting the operating error signal if the position detection signal is received when the count value is less than or equal to the lower limit value or greater than or equal to the upper limit value.

9. The device of claim 8, wherein the drive confirmation means (50) outputs the operating error signal as an interrupt signal to the data generating means (1); and the data generating means (1) performs an error handling process corresponding to the operating error based on the interrupt signal.

10. The device of any one of claims 6 to 9, wherein a stop drive signal for stopping the drive mechanism operation is output based on the operating error signal.

11. The device of any one of claims 6 to 10, wherein the drive means (7; 7'; 7, 74) comprises a stepping motor (7);
    the timing data is timing data for controlling a phase change timing of the motor; and
    the control data is phase pattern data set when the motor phase changes, and phase current data for controlling current supplied to the motor when the motor phase changes.

12. The device of claim 11, wherein the movable member (73) is a carriage driven by the stepping motor (7).

13. The device of any of claims 6 to 12, wherein the movable member (73) is a carriage carrying the ink jet head of an ink jet printer; and the drive confirmation means (50) performs the drive confirmation process when the carriage is driven to accomplish an ink jet head cleaning operation.

14. A method of controlling a drive mechanism (5, 70) including drive control means (6) and drive means (7; 7'; 7, 74) controlled by the drive control means (6), comprising steps of:

14

(a) generating and storing plural data sets each including control data for controlling the drive means (7; 7'; 7, 74) and associated timing data for controlling the time at which the control data are output to the drive control means (6), and outputting a first start signal;

(b) reading, in response to the first start signal, the timing data of a first one of the stored data sets and setting the read timing data into timer means (4) by direct memory access;

(c) starting, in response to step (b), operation of said timer means (4) and outputting a time-up signal when a time interval specified by the timing data read in step (b) passes;

(d) reading the control data of said first data set in response to said time-up signal and sending the read control data to the drive control means (6) by direct memory access;

(e) reading the timing data of the next data set, and repeating steps (c) to (e) based on the timing data of said next data set; and

(f) repeating step (e) until all data sets have been processed;

**characterized in that**

step (d) comprises outputting a second start signal, when the sending of the control data of one data set is completed; and

step (e) is executed in response to said second start signal.

**15.** The method of claim 14, wherein said control data in each data set comprises plural types of control data and wherein step (d) comprises:

(g) sequentially and individually reading each type of control data from a first type to a last type and sending the read control data to the drive control means (6).

**16.** The method of claim 15, wherein the drive means (7; 7'; 7, 74) comprises a stepping motor (7) and the timing data is phase change timing data for changing the phase of the stepping motor (7); and the control data comprises phase pattern data and phase current data for setting the phase pattern and phase current at the phase change timing.

**17.** The method of claim 15, wherein the drive unit is a print head and the timing data is timing data for controlling head drive timing; and the control data comprises head drive trigger data and print data.

**18.** A computer program comprising a command set and data set for causing a drive control device to carry out a method as defined in any one of claims 14 to 17.

**19.** A computer-readable data storage medium carrying a computer program comprising a command set and data set for causing a drive control device to carry out a method as defined in any one of claims 14 to 17.

**20.** The data storage medium of claim 19 being a Compact Disc, floppy disc, hard disk, or magnetically recordable tape.

**Patentansprüche**

**1.** Antriebssteuervorrichtung zum Steuern eines Antriebsmechanismus (5, 70) mit einer Antriebssteuereinrichtung (6) und einer von der Antriebssteuereinrichtung (6) gesteuerten Antriebseinrichtung (7; 7'; 7, 74), aufweisend:

eine Datenerzeugungseinrichtung (1) zum Erzeugen einer Vielzahl von Datensätzen, die je Steuerdaten zum Steuern der Antriebseinrichtung (7; 7'; 7, 74) und zugeordnete Zeitdaten umfassen, um den Zeitpunkt, zu dem die Steuerdaten an die Antriebssteuereinrichtung (6) ausgegeben werden, zu steuern, und zum Ausgeben eines ersten Startsignals, um die Datenübertragung zur Antriebssteuereinrichtung (6) zu beginnen;
eine Speichereinrichtung (2) zum Speichern der Zeitdaten und Steuerdaten;
eine Zeitgebereinrichtung (4) zum Starten eines Zeitsteuervorgangs, wenn sie Zeitdaten empfängt, und zum Ausgeben eines Zeit-abgelaufen-Signals, wenn eine von den empfangenen Zeitdaten spezifizierte Zeit vorübergeht;
eine erste Einrichtung mit Direktspeicherzugriff (14), die auf das erste Startsignal anspricht, um Zeitdaten aus der Speichereinrichtung (2) zu lesen und die gelesenen Zeitdaten an die Zeitgebereinrichtung (4) zu senden; und
eine zweite Einrichtung mit Direktspeicherzugriff (15), die auf das Zeit-abgelaufen-Signal anspricht, um Steuerdaten aus der Speichereinrichtung (2) zu lesen und die Steuerdaten an die Antriebssteuereinrichtung (6) zu senden, **dadurch gekennzeichnet, daß**

die zweite Einrichtung mit Direktspeicherzugriff (15) eine Einrichtung zum Ausgeben eines zweiten Startsignals aufweist, wenn das Senden der Steuerdaten eines Datensatzes vollendet ist; und

die erste Einrichtung mit Direktspeicherzugriff (14) auf das zweite Startsignal anspricht, um die Zeitdaten des nächsten Datensatzes aus der Speichereinrichtung (2) zu lesen und zur Zeitgebereinrichtung (4) zu senden.

2. Vorrichtung nach Anspruch 1, bei der die Steuerdaten in jedem Datensatz erste und zweite Arten von Steuerdaten aufweisen und die zweite Einrichtung mit Direktspeicherzugriff (15) ferner aufweist:

eine erste Steuereinheit (16), die auf das Zeit-abgelaufen-Signal anspricht, um die erste Art Steuerdaten eines jeweiligen Datensatzes aus der Speichereinrichtung (2) zu lesen und zur Antriebssteuereinrichtung (6) zu senden, und

eine zweite Steuereinheit (17), die dadurch aktiviert wird, daß das Senden der ersten Art Steuerdaten an die Antriebssteuereinrichtung (6) vollendet ist, um die zweite Art Steuerdaten des jeweiligen Datensatzes zu lesen, diese an die Antriebssteuereinrichtung (6) zu senden und dann das zweite Startsignal auszugeben.

3. Vorrichtung nach Anspruch 2, bei der die Antriebseinrichtung einen Schrittmotor (7) aufweist; die Zeitdaten Zeitdaten zum Steuern einer Phasenänderungszeit des Motors (7) sind; und die Steuerdaten Phasenmusterdaten sind, die gesetzt werden, wenn sich die Motorphase ändert, und Phasenstromdaten zum Steuern des dem Motor (7) zugeführten Stroms, wenn sich die Motorphase ändert.

4. Vorrichtung nach Anspruch 3, bei der die Datenerzeugungseinrichtung (1) geeignet ist, Zeitdaten, Steuerdaten erster Art und Steuerdaten zweiter Art auf der Basis grundlegender Zeitdaten, Phasenmusterdaten und Phasenstromdaten zur Verwendung während Motorbeschleunigung, -Verlangsamung und Betrieb mit gleichbleibender Geschwindigkeit zu erzeugen.

5. Vorrichtung nach Anspruch 2, bei der die Antriebseinrichtung einen Druckkopf (7') aufweist; und die Zeitdaten Daten zum Steuern der Kopfantriebszeit sind, und die Steuerdaten Antriebstriggerdaten zum tatsächlichen Antreiben des Kopfes und Druckdaten aufweisen.

6. Vorrichtung nach Anspruch 1, bei der die Antriebseinrichtung (7, 74) eine Einrichtung zum Bewegen eines beweglichen Gliedes (73) ist, ferner aufweisend:

eine Positionserfassungseinrichtung (72) zum Ausgeben eines Positionserkennungssignals, wenn das bewegliche Glied (73) eine erste Bezugsposition (HP) erreicht; und

eine Antriebsbestätigungseinrichtung (50) zum Berechnen einer logischen Betriebsposition des beweglichen Gliedes (73) aus den ausgegebenen Steuerdaten, Bestätigen des Betriebszustands der Antriebseinheit durch Vergleichen der logischen Betriebsposition mit der tatsächlichen Betriebsposition anhand des Erkennungssignals und Ausgeben eines Betriebsfehlersignals, wenn zwischen der logischen und der tatsächlichen Betriebsposition fehlende Übereinstimmung erfaßt wird.

7. Vorrichtung nach Anspruch 6, bei der die Antriebsbestätigungseinrichtung (50) eine Vergleichsdatenspeichereinheit (61, 65) aufweist, die einen Vergleichswert speichert; einen Zähler (63), der an einer zweiten Bezugsposition (S) des beweglichen Gliedes (73) initialisiert wird, um jedes der Zeit-abgelaufen-Signale zu zählen; und ein Vergleichsglied (64) zum Vergleichen des Zählwertes des Zählers (63) mit dem Vergleichswert, wobei der Betriebszustand der Antriebseinrichtung (7; 7'; 7, 74) auf der Grundlage der Ausgabe des Vergleichsgliedes festgestellt wird, wenn das Positionserkennungssignal empfangen wird.

8. Vorrichtung nach Anspruch 7, bei der die Vergleichsdatenspeichereinheit (61, 65) aufweist:

eine erste und eine zweite Vergleichsdatenspeichereinheit zum Speichern eines unteren bzw. eines oberen Grenzwertes für den Zählwert des Zählers (63), der gezählt wird, während sich das bewegliche Glied (73) von der zweiten Bezugsposition (S) zu der ersten Bezugsposition (HP) bewegt;

wobei die Antriebsbestätigungseinrichtung (50) das Betriebsfehlersignal ausgibt, falls das Positionserkennungssignal empfangen wird, wenn der Zählwert geringer als oder gleich dem unteren Grenzwert oder größer als oder gleich dem oberen Grenzwert ist.

9. Vorrichtung nach Anspruch 8, bei der die Antriebsbestätigungseinrichtung (50) das Betriebsfehlersignal als Unterbrechungssignal an die Datenerzeugungseinrichtung (1) ausgibt; und die Datenerzeugungseinrichtung (1) einen Fehlerbehandlungsprozeß entsprechend dem Betriebsfehler auf der Grundlage des Unterbrechungssignals durchführt.

10. Vorrichtung nach einem der Ansprüche 6 bis 9, bei der ein Antriebsstopsignal zum Anhalten des Betriebs des Antriebsmechanismus auf der Grundlage des Betriebsfehlersignals ausgegeben wird.

11. Vorrichtung nach einem der Ansprüche 6 bis 10, bei der die Antriebseinrichtung (7; 7'; 7, 74) einen Schrittmotor (7) aufweist; die Zeitdaten Zeitdaten zum Steuern einer Phasenänderungszeit des Motors sind; und die Steuerdaten Phasenmusterdaten sind, die gesetzt werden, wenn sich die Motorphase ändert, und Phasenstromdaten zum Steuern des dem Motor zugeführten Stroms, wenn sich die Motorphase ändert.

12. Vorrichtung nach Anspruch 11, bei der das bewegliche Glied (73) ein vom Schrittmotor (7) angetriebener Schlitten ist.

13. Vorrichtung nach einem der Ansprüche 6 bis 12, bei der das bewegliche Glied (73) ein Schlitten ist, der den Tintenstrahlkopf eines Tintenstrahldruckers trägt; und die Antriebsbestätigungseinrichtung (50) das Antriebsbestätigungsverfahren durchführt, wenn der Schlitten angetrieben wird, um einen Reinigungsvorgang des Tintenstrahlkopfes durchzuführen.

14. Verfahren zum Steuern eines Antriebsmechanismus (5, 70) mit einer Antriebssteuereinrichtung (6) und einer von der Antriebssteuereinrichtung (6) gesteuerten Antriebseinrichtung (7; 7'; 7, 74), folgende Schritte aufweisend:

   (a) Erzeugen und Speichern mehrerer Datensätze, die je Steuerdaten zum Steuern der Antriebseinrichtung (7; 7'; 7, 74) und zugeordnete Zeitdaten zum Steuern des Zeitpunktes umfassen, zu dem die Steuerdaten an die Antriebssteuereinrichtung (6) ausgegeben werden, und Ausgeben eines ersten Startsignals;
   (b) als Reaktion auf das erste Startsignal, Lesen der Zeitdaten eines ersten der gespeicherten Datensätze und Setzen der gelesenen Zeitdaten in eine Zeitgebereinrichtung (4) durch Direktspeicherzugriff;
   (c) als Reaktion auf Schritt (b), Starten des Betriebs der Zeitgebereinrichtung (4) und Ausgeben eines Zeit-abgelaufen-Signals, wenn ein von den im Schritt (b) gelesenen Zeitdaten spezifiziertes Zeitintervall vorübergeht;
   (d) Lesen der Steuerdaten des ersten Datensatzes als Reaktion auf das Zeit-abgelaufen-Signal und Senden der gelesenen Steuerdaten an die Antriebssteuereinrichtung (6) durch Direktspeicherzugriff;
   (e) Lesen der Zeitdaten des nächsten Datensatzes und Wiederholen der Schritte (c) bis (e) auf der Grundlage der Zeitdaten des nächsten Datensatzes; und
   (f) Wiederholen des Schritts (e) bis alle Datensätze verarbeitet worden sind;

   **dadurch gekennzeichnet, daß**
   der Schritt (d) aufweist, ein zweites Startsignal auszugeben, wenn das Senden der Steuerdaten eines Datensatzes vollendet ist; und
   der Schritt (e) als Reaktion auf das zweite Startsignal ausgeführt wird.

15. Verfahren nach Anspruch 14, bei dem die Steuerdaten in jedem Datensatz mehrere Arten Steuerdaten aufweisen, und bei dem der Schritt (d) aufweist:

   (g) sequentielles und individuelles Lesen jeder Art Steuerdaten von einer ersten Art bis zu einer letzten Art und Senden der gelesenen Steuerdaten an die Antriebssteuereinrichtung (6).

16. Verfahren nach Anspruch 15, bei dem die Antriebseinrichtung (7; 7'; 7, 74) einen Schrittmotor (7) aufweist und die Zeitdaten Phasenänderungszeitdaten zum Ändern der Phase des Schrittmotors (7) sind; und die Steuerdaten Phasenmusterdaten und Phasenstromdaten zum Setzen des Phasenmusters und Phasenstroms im Zeitpunkt der Phasenänderung umfassen.

17. Verfahren nach Anspruch 15, bei dem die Antriebseinheit ein Druckkopf ist und die Zeitdaten Zeitdaten zum Steuern der Kopfantriebszeit sind; und die Steuerdaten Kopfantriebstriggerdaten und Druckdaten aufweisen.

18. Rechnerprogramm mit einem Befehlssatz und einem Datensatz, die eine Antriebssteuervorrichtung veranlassen, ein Verfahren nach irgend einem der Ansprüche 14 bis 17 durchzuführen.

**19.** Maschinenlesbarer Datenträger mit einem Rechnerprogramm, aufweisend einen Befehlssatz und einen Datensatz, die eine Antriebssteuervorrichtung veranlassen, ein Verfahren nach irgendeinem der Ansprüche 14 bis 17 durchzuführen.

**20.** Datenträger nach Anspruch 19, der eine CD, Diskette, Festplatte oder ein Magnetaufzeichnungsband ist.

**Revendications**

**1.** Dispositif de commande d'entraînement pour commander un mécanisme (5, 70) d'entraînement comprenant un moyen (6) de commande d'entraînement et des moyens (7 ; 7' ; 7, 74) d'entraînement commandés par le moyen (6) de commande d'entraînement, comprenant :

un moyen (1) générateur de données pour produire des ensembles multiples de données comprenant chacun des données de commande pour commander les moyens (7 ; 7' ; 7, 74) d'entraînement et des données de temporisation associées pour commander le moment où les données de commande sont émises en sortie vers le moyen (6) de commande d'entraînement, et pour émettre en sortie un premier signal de début pour faire débuter la transmission de données au moyen (6) de commande d'entraînement ;
un moyen (2) de mémorisation pour mémoriser les données de temporisation et les données de commande ;
un moyen (4) formant temporisateur pour faire débuter une opération de temporisation, lorsqu'il reçoit des données de temporisation et pour émettre en sortie un signal d'écoulement de temps, lorsqu'une durée spécifiée par les données de temporisation reçues s'est écoulée ;
un premier moyen (14) d'accès direct à la mémoire répondant au premier signal de début, en lisant des données de temporisation dans le moyen (2) de mémorisation et en envoyant les données de temporisation lues au moyen (4) formant temporisateur ; et
un deuxième moyen (15) d'accès direct à la mémoire répondant au signal d'écoulement de temps, en lisant des données de commande dans le moyen (2) de mémorisation et en envoyant les données de commande lues moyen (6) de commande d'entraînement

**caractérisé en ce que** :

le deuxième moyen (15) d'accès direct à la mémoire comprend un moyen destiné à émettre en sortie, lorsque l'envoi des données de commande d'un ensemble de données est achevé, un deuxième signal de début ; et
le premier moyen (14) d'accès direct à la mémoire répond au deuxième signal de début, en lisant les données de temporisation de l'ensemble de données suivant dans le moyen (2) de mémorisation et en les envoyant au moyen (4) formant temporisateur.

**2.** Dispositif suivant la revendication 1, dans lequel les données de commande de chaque ensemble de données comprennent des premier et deuxième types de données de commande et le deuxième moyen (15) d'accès direct à la mémoire comprend, en outre :

une première unité (16) de commande répondant au signal d'écoulement de temps, en lisant les données de commande du premier type d'un ensemble de données respectives dans le moyen (2) de mémorisation et en les envoyant au moyen (6) de commande d'entraînement ; et
une deuxième unité (17) de commande, activée par l'achèvement de l'envoi des données de commande du premier type au moyen (6) de commande d'entraînement, pour lire les données de commande du deuxième type de l'ensemble de données respectives, les envoyer au moyen (6) de commande d'entraînement et émettre ensuite, en sortie le deuxième signal de début.

**3.** Dispositif suivant la revendication 2, dans lequel le moyen d'entraînement comprend un moteur (7) pas à pas ;
les données de temporisation sont des données de temporisation pour commander la temporisation d'un changement de phase du moteur (7) ; et
les données de commande sont des données de modèle de phase réglées lorsque la phase du moteur change, et des données de courant de phase pour commander un courant fourni au moteur (7) lorsque la phase du moteur change.

**4.** Dispositif suivant la revendication 3, dans lequel le moyen (1) générateur de données est conçu pour produire les données de temporisation, des données de commande du premier type et des données de commande du deuxième type, sur la base de données de temporisation de base, des données de modèle de phase et des données de courant de phase pour une utilisation pendant l'accélération, le ralentissement et un fonctionnement à vitesse constante du moteur.

**5.** Dispositif suivant la revendication 2, dans lequel le moyen d'entraînement comprend une tête (7') d'impression ; et les données de temporisation sont des données pour commander la temporisation de l'entraînement de la tête ; et les données de commande comprennent des données de déclenchement d'entraînement pour entraîner réellement la tête et imprimer les données.

**6.** Dispositif suivant la revendication 1, dans lequel le moyen (7, 74) d'entraînement est un moyen destiné à déplacer un élément (73) mobile, comprenant, en outre :

un moyen (72) de détection de position pour émettre en sortie un signal de détection de position, lorsque l'élément (73) mobile atteint une première position (HP) de référence ; et
un moyen (50) de confirmation d'entraînement destiné à calculer une position de fonctionnement logique de l'élément (73) mobile, à partir des données de commande émises en sortie, à confirmer l'état de fonctionnement de l'unité d'entraînement, en comparant la position de fonctionnement logique avec la position de fonctionnement réelle, sur la base du signal de détection, et à émettre en sortie un signal d'erreur de fonctionnement, lorsqu'une discordance est détectée entre les positions de fonctionnement réelle et logique.

**7.** Dispositif suivant la revendication 6, dans lequel le moyen (50) de confirmation d'entraînement comprend une unité (61, 65) de mémorisation de données de comparaison mémorisant une valeur de comparaison ;
un compteur (63) qui est initialisé à une deuxième position (S) de référence de l'élément (73) mobile pour compter chacun des signaux d'écoulement de temps ; et
un comparateur (64) pour comparer la valeur de comptage du compteur (63) avec la valeur de comparaison ;
l'état de fonctionnement des moyens (7 ; 7' ; 7, 74) d'entraînement étant déterminé sur la base de la sortie du comparateur, lorsque le signal de détection de position est reçu.

**8.** Dispositif suivant la revendication 7, dans lequel l'unité (61, 65) de mémorisation de données de comparaison comprend des première et deuxième unités de mémorisation de données de comparaison pour mémoriser une valeur limite inférieure et une valeur limite supérieure respectivement, pour la valeur de comptage du compteur (63), comptée tandis que l'élément (73) mobile se déplace de la deuxième position (S) de référence à la première position (HP) de référence ;
le moyen (50) de confirmation d'entraînement émettant en sortie le signal d'erreur de fonctionnement si le signal de détection de position est reçu lorsque la valeur de comptage est inférieure ou égale à la valeur limite inférieure ou supérieure ou égale à la valeur limite supérieure.

**9.** Dispositif suivant la revendication 8, dans lequel le moyen (50) de confirmation d'entraînement émet en sortie le signal d'erreur de fonctionnement, en tant que signal d'interruption, vers le moyen (1) générateur de données ; et le moyen (1) générateur de données exécute une opération de traitement d'erreur correspondant à l'erreur de fonctionnement, sur la base du signal d'interruption.

**10.** Dispositif suivant l'une quelconque des revendications 6 à 9, dans lequel un signal d'arrêt d'entraînement pour arrêter le fonctionnement du mécanisme d'entraînement est émis en sortie, sur la base du signal d'erreur de fonctionnement.

**11.** Dispositif suivant l'une quelconque des revendications 6 à 10, dans lequel les moyens (7 ; 7' ; 7, 74) comprennent un moteur (7) pas à pas ;
les données de temporisation sont des données de temporisation pour commander la temporisation d'un changement de phase du moteur ; et
les données de commande sont des données de modèle de phase réglées lorsque la phase du moteur change, et des données de courant de phase pour commander un courant fourni au moteur lorsque la phase du moteur change.

**12.** Dispositif suivant la revendication 11, dans lequel l'élément (73) mobile est un chariot entraîné par le moteur (7) pas à pas.

**13.** Dispositif suivant l'une quelconque des revendications 6 à 12, dans lequel l'élément (73) mobile est un chariot entraînant la tête à jet d'encre d'une imprimante à jet d'encre ; et l'élément (50) de confirmation d'entraînement exécute l'opération de confirmation d'entraînement, lorsque le chariot est entraîné pour accomplir une opération de nettoyage de la tête à jet d'encre.

**14.** Procédé pour commander un mécanisme (5, 70) d'entraînement comprenant un moyen (6) de commande d'entraînement et des moyens (7 ; 7' ; 7, 74) d'entraînement, commandés par le moyen (6) de commande d'entraînement, comprenant les étapes consistant à :

(a) produire et mémoriser des ensembles multiples de données comprenant chacun des données de commande pour commander les moyens (7 ; 7' ; 7, 74) d'entraînement et des données de temporisation associées pour commander le moment auquel les données de commande sont émises en sortie vers le moyen (6) de commande d'entraînement, et émettre en sortie un premier signal de début ;
(b) lire, en réponse au premier signal de début, les données de temporisation d'un premier des ensembles de données mémorisés et régler les données de temporisation lues dans le moyen (4) formant temporisateur, par accès direct à la mémoire ;
(c) faire débuter, en réponse à l'étape (b), le fonctionnement du moyen (4) formant temporisateur et émettre en sortie un signal d'écoulement de temps, lorsqu'un intervalle de temps spécifié par les données de temporisation lues à l'étape (b), s'est écoulé ;
(d) lire les données de commande du premier ensemble de données, en réponse au signal de temps écoulé et envoyer les données de commande lues au moyen (6) de commande d'entraînement par accès direct à la mémoire ;
(e) lire les données de temporisation de l'ensemble de données suivant, et répéter les étapes (c) à (e) sur la base des données de temporisation de l'ensemble de données suivant ; et
(f) répéter l'étape (e) jusqu'à ce que tous les ensembles de données aient été traités ;

**caractérisé en ce que :**

l'étape (d) comprend le fait d'émettre en sortie un deuxième signal de début, lorsque l'envoi des données de commande d'un ensemble de données est achevé ; et
l'étape (e) est exécutée en réponse au deuxième signal de début.

**15.** Procédé suivant la revendication 14, dans lequel les données de commande de chaque ensemble de données comprennent des types multiples de données de commande et dans lequel l'étape (d) comprend le fait de :

(g) lire séquentiellement et individuellement chaque type de données de commande, d'un premier type à un dernier type et envoyer les données de commande lues au moyen (6) de commande d'entraînement.

**16.** Procédé suivant la revendication 15, dans lequel les moyens (7 ; 7' ; 7, 74) d'entraînement comprennent un moteur (7) pas à pas et les données de temporisation sont des données de temporisation de changement de phase pour changer la phase du moteur (7) pas à pas ; et les données de commande comprennent des données de modèle de phase et des données de courant de phase pour régler le modèle de phase et le courant de phase à la temporisation du changement de phase.

**17.** Procédé suivant la revendication 15, dans lequel l'unité d'entraînement est une tête d'impression et les données de temporisation sont des données de temporisation pour commander la temporisation d'entraînement de la tête ; et les données de commande comprennent des données de déclenchement de l'entraînement de la tête et des données d'impression.

**18.** Programme informatique comprenant un ensemble de commandes et un ensemble de données pour faire en sorte qu'un dispositif de commande d'entraînement mette en oeuvre un procédé, tel que défini dans l'une quelconque des revendications 14 à 17.

**19.** Support d'enregistrement de données pouvant être lu par un ordinateur, comportant un programme informatique comprenant un ensemble de commandes et un ensemble de données, pour faire en sorte qu'un dispositif de commande d'entraînement mette en oeuvre un procédé, tel que défini dans l'une quelconque des revendications 14 à 17.

**20.** Support d'enregistrement de données suivant la revendication 19 consistant en un disque compact, une disquette, un disque dur ou une bande d'enregistrement magnétique.

**FIG. 1**

FROM CPU 1

10 TIMING DATA TABLE → FIRST DMA UNIT 14 → TIMER

27

11 FIRST CONTROL DATA TABLE

28

12 SECOND CONTROL DATA TABLE → SECOND DMA UNIT 15

13 N-TH CONTROL DATA TABLE

4

5

6 DRIVE CONT-ROLLER

7 DRIVER

FIG. 2

EP 1 154 341 B1

FIG. 3

FIG. 4

FIG. 5

FROM CPU 1

10 TIMING DATA TABLE → TIMING CONTROL UNIT 14 → TIMER 4

28

27

11 PHASE PATTERN DATA TABLE → PHASE PATTERN CONTROLLER 16

26

12 PHASE CURRENT DATA TABLE → PHASE CURRENT CONTROLLER 17

15

MOTOR DRIVE CONT-ROLLER 6 → STEPPING MOTOR 7

5

29

26

EP 1 154 341 B1

FIG. 6

EP 1 154 341 B1

FIG. 7

EP 1 154 341 B1

2

START

S100 — SET TABLES

S101 — START MOTOR DRIVE REQUEST

TIMING DATA — 10

PHASE PATTERN DATA — 11

PHASE CURRENT DATA — 12

S102 — READ TIMING DATA

S103 — SET TIMING DATA TO TIMER

S104 — TIME UP?
No
Yes

PHASE CURRENT SUPPLY BY PHASE PATTERN

PASS  1st  DUMMY VALUE

2nd

3rd

n-th

S105 — READ PHASE PATTERN DATA

S106 — SET PHASE PATTERN DATA

S107 — READ PHASE CURRENT DATA

S108 — SET PHASE CURRENT DATA

S109 — NEXT TIMING DATA AVAILABLE ?
Yes
No

RETURN

FIG. 8

EP 1 154 341 B1

FROM CPU 1

10 TIMING DATA TABLE → TIMING CONTROL UNIT 14 → TIMER 28

27

11' HEAD DRIVE TRIGGER DATA TABLE

12' PRINT DATA TABLE

HEAD DRIVE TRIGGER CONTROLLER 16

26 15

PRINT DATA CONTROLLER 17

4

5

DRIVE CONT-ROLLER 6 → HEAD 7'

29

FIG. 9

```
DRIVE TIMING DATA
        "


        "
```

10

TIMER

4

HEAD DRIVE TRIGGER CONTROLLER 16 SETS HEAD DRIVE TRIGGER

41a

```
DRIVE TRIGGER 1
DRIVE TRIGGER 2
```

DRIVE CONTROLLER (TRIGGER)

6

FROM CPU 1 →

TIMING CONTROL UNIT 14 STARTS TIMER

40a

7 ⌇ ☐ MOTOR

PRINT DATA CONTROLLER 17 SENDS PRINT DATA

42a

DRIVE CONTROLLER (STORE DATA)

6

```
PRINT DATA
        "


        "
```

FIG. 10

EP 1 154 341 B1

INT (INTERRUPT) SIGNAL

1 CPU

2 MEMORY

3 DMA CONTROLLER

4 TIMER

TIME-UP SIGNAL

50 DRIVE CONFIRMATION MEANS

8

9

71

72

73

6 MOTOR DRIVE CONTROLLER

74 MOTOR DRIVER

7 STEPPING MOTOR

70

FIG. 11

FIG. 12

EP 1 154 341 B1

FIG. 13

EP 1 154 341 B1

FIG. 14

FIG. 15

DRIVE STATE CONFIRMATION
PROCESS START

S200

DRIVE
CONFIRMATION
STARTS

No

Yes

S201

TIME-UP SIGNAL?

No

Yes

S202

INCREMENT POSITION
COUNTER

S203

HP DETECTED?

Yes

No

S204

LOWER LIMIT
= POSITION COUNTER
?

No

Yes

S205

TIME-UP SIGNAL?

No

Yes

S206

INCREMENT POSITION
COUNTER

S207

HP DETECTED?

Yes

No

S208

UPPER LIMIT
= POSITION COUNTER
?

No

Yes

S210

CLEAR COUNTERS

S211

CLEAR REGISTERS

S209

INTERRUPT SIGNAL
OUTPUT (ERROR)

FIG. 16

FIG. 17

FIG. 18

CPU

HP DETECTION SIGNAL

DETECTION CIRCUIT

2

1

75

CONTROL DATA TABLE

72

73

71

6

74

7

MOTOR DRIVE CONTROLLER

MOTOR DRIVER

STEPPING MOTOR

EP 1 154 341 B1

39